# EUROPEAN PATENT APPLICATION

(11) **EP 1 552 864 A1**
(43) Date of publication of application: **13.07.2005**
(21) Application number: 03733488.5
(22) Date of filing: 18.06.2003
(51) Int. Cl.: A63F 13/10, A63F 13/12

(54) **TARGET TIME SETTING GAME SYSTEM CONSIDERING NETWORK GAME**

(30) Priority: 26.06.2002 JP 2002186021
(71) Applicant: Konami Corporation, Chiyoda-ku, Tokyo 100-6330 (JP)
(72) Inventor: AOKI, Jun, c/o Konami Corporation, Chiyoda-ku, Tokyo 100-6330 (JP)
(74) Representative: Winter, Brandl, Fürniss, Hübner, Röss, Kaiser, Polte Partnerschaft Patent- und Rechtsanwaltskanzlei
(86) International application number: PCT/JP2003/007726
(87) International publication number: WO 2004/002594

(57) **Abstract**

The invention can finish a game comprising a plurality of stages in a desired time for which a player wishes to play the game. A game machine or a game distributing system has stage storage means (109) for storing the a plurality of stages, model time storage means (108) for storing model times as standard times required to clear each of stages, desired time setting means (104) for setting the time the player wishes toplaythe game for, and stage selectingmeans (106). The stage selecting means (106) selects a combination of the a plurality of stages so as to finish the game in a time corresponding to the desired time set by the player with reference to the model time of each stage.

## Description

### TECHNICAL FIELD

The present invention relates to a game machine, a computer program, a game method and a game distributing system for providing a game comprising a plurality of stages to a player.

### BACKGROUND ART

A conventional well-known video game is configured such that the entire game is made up of a plurality of stages, progress is made through the game by completing each of the stages, and the game is finished when the final stage is completed. For example, in the case of a role playing game (hereinafter called "RPG"), the player visits various towns by operating a leading character and solves puzzles, obtains items and wins battles against enemies, thus completing each stage. The entire game is finished by defeating a boss character at the final stage. Further, in a baseball game, one game consists of nine innings, and all nine innings must be played to complete one game. In the case of a season mode, the game is finished by completing each of a number of monthly stages comprising a specified number of games. In a fighting game, the entire game can be finished by defeating each competition partner. In a music game, the entire game can be finished by completing each tune with a certain rating.

However, in the above conventional games, there are the following problems. Namely, there is a problem to be solved at each stage. If this problem is not solved, that stage can not be completed. Further, the game is set such that the entire game can not be finished if all such stages are not completed. Therefore, it was necessary to spend a certain time, usually several hours or even several tens of hours, to complete the entire game.

Thus, since a considerable amount of time must be spent to complete the entire game, an ordinary person having a short leisure time, etc. would be likely to avoid playing of the game. Further, even if the game is finished in about 30 minutes, as in a sports game, a certain time is inevitably taken so that no game can be finished in a time desired by the player. Further, with respect to a game for which a sequel is sold, a player will more than likely first want to complete the first part of the game. However, it is quite inconvenient for someone to complete an entire game. Therefore, there is also a case where the player would not actually get around to playing the sequel game. Further, it is expected in the future that games will appear in which accounting is performed according to a game play time by utilizing the Internet, etc. However, if the player can not set a desired time at this time, there is a fear that an unexpected fee will be charged.

The present invention has been conceived in view of the above problems, and its object is to provide a game machine, a computer program, a game method and a game distributing system able to complete an entire game in a short time by a player having a small amount of leisure time, or able to finish the entire game in a time convenient for the player within the short leisure time while keeping the game as interesting as possible.

### DISCLOSURE OF THE INVENTION

The present invention adopts the following structure to solve the above problem. Namely, the present invention is directed to a game machine having stage storage means for storing a plurality of stages and providing a game comprising a plurality of stages to a player, the game machine comprising model time storage means for storing model times as standard times required to clear each of the stages ; desired time setting means for setting a desired time at which the player wants to play the game; and stage selecting means for selecting one or more stages such that the total of the model times of the one or more stages stored in the model time storage means is closest to the desired time set by the desired time setting means, wherein the game comprising the one or more stages selected by the stage selecting means is provided to the player.

According to the present invention, the player can set the time spent in the game and the stage is selected so as to be adapted to this time. Therefore, the entire game can be completed in about the same time as the desired time of the player. Accordingly, a player having a small amount of leisure time can also complete the entire game during a weekend. Further, the entire game can be completed by taking up only a small amount of free time, e.g., while commuting and while attending school. Further, in a game in which a sequel is sold, etc., the player can quickly finish the first part and can then quickly start the sequel and can also catch up with sequentially sold games. Further, in a game utilizing the Internet, etc., the player can safely play the game since the game is charged at a fee within an expected range.

Further, one aspect of the present invention is characterized in that said stage selecting means assigns a flag showing importance to each stage and preferentially selects one or more stages of higher importance.

It is therefore possible to prevent the game from becoming boring to as great an extent as possible because stages of higher importance can be preferentially selected within this game.

Further, one aspect of the present invention is characterized in that a playing order of said plurality of stages is determined in the game, and the game machine further comprises supplementary stage storage means for storing a supplementary stage which corresponds to one or more continuous stages among said plurality of stages causing the inappropriateness in the game connection in a stage omitting case , and has a time required for clearing that is shorter than that for the one or more continuous stages; and supplementary stage insertion means for reading the supplementary stage for dissolving the inappropriateness in this connection from said supplementary stage storage means, and inserting the supplementary stage between pertinent stages when the inappropriateness is caused in the game connection between the respective stages selected by said stage selecting means.

Thus, if a replacement stage for supplementing stages omitted as a result of the stage selection is inserted, no connection of a story becomes unclear even in games having a storyline as in the RPG so that the entire game can be cleared.

Further, one aspect of the present invention is characterized in that the game machine further comprises play history storage means for storing a predetermined history for plays of the player, and said supplementary stage insertion means changes the supplementary stage to predetermined contents according to the play history performed by the player till then.

Thus, since the contents of the supplementary stage can be changed according to the play history, the game can be more smoothly connected. For example, when the stage of a July season is omitted in the season mode of a baseball game and its supplementary stage is displayed, the results until a June season are stored as a play history and the percentage of victories according to this play history is displayed, etc. at this supplementary stage. Thus, an August season can be more naturally attained.

Further, one aspect of the present invention is characterized in that said desired time setting means can set the desired time before the game beginning and when playing the game, and can set the desired time a number of times when playing the game.

Thus, a desired time can be set by the desired time setting means even after the game is started. Accordingly, it is possible to flexibly cope with the player's circumstances.

Further, one aspect of the present invention is characterized in that, when a difference of a predetermined time or more is caused between an elapsed playing time of the player and the total of the model times of stages cleared until the present stage, one or more stages after said present stage are again selected by said stage selecting means such that the total of the model times of said one or more stages is closest to the remaining desired time obtained by subtracting said elapsed playing time from the desired time set by the player using the desired time setting means.

Thus, if the shift of time is checked when playing the game and one or more subsequent stages are reselected, the entire game can be finally cleared in approximately the same time as the desired time of the player even in a case in which the player has spent a time longer than the model time supposed to clear the stage.

Further, one aspect of the present invention is characterized in that the game machine further comprises model time correcting means for calculating the ratio of an elapsed playing time of the player to the total of the model times of stages cleared until the present stage after the game beginning, and changing the model time of each stage to a time according to said ratio when the ratio reaches a predetermined ratio; and stage reselecting means for again selecting one or more stages after said present stage by said stage selecting means such that the total of the model times changed by said model time correcting means of said one or more stages is closest to the remaining desired time obtained by subtracting said elapsed playing time from the desired time set by said desired time setting means.

Thus, for example, when the player is a skilled person, there is a case which the player early clears the stage in a time shorter than the standard time set in advance. The stage is reselected after the model times of other stages are changed according to the stage clearing speed of the player. Accordingly, more stages can be provided within the desired time of the player, and the game can be set such that the clearing time is shortened and no interest of the game is lost.

Further, one aspect of the present invention is characterized in that the game machine further comprises notifying means for notifying the player when a difference of a predetermined time or more is caused between the elapsed playing time of the player and the total of the standard times of stages cleared until the present stage.

Thus, the player can recognize that the game will not be cleared at substantially the same time as the desired time if the game finishes at the current rate of completion of the game.

Further, one aspect of the present invention is characterized in that display for urging resetting of the desired time is performed after the notification by said notifying means.

Thus, it can be brought to the payers attention that the game will not be finished in the desired time, and the desired time can be further set to conform with the circumstances of the player.

Further, one aspect of the present invention is characterized in a game machine having storage means for storing a plurality of stages and providing a game comprising said plurality of stages to a player, and characterized in that the game machine comprises model time storage means for storing model times as standard times required to clear each of said stages; play time setting means for setting a time for playing the game according to the amount of a play fee inserted by the player; and stage selecting means for selecting one or more stages after the present stage such that the total of the model times of said one or more stages is closest to the remaining play time obtained by subtracting a elapsed playing time of the player from the play time set by said play time setting means when a difference of a predetermined time or more is caused between said elapsed playing time and the total of the model times of stages cleared until the present stage after the game beginning, wherein the game comprising said one or more stages selected by said stage selecting means is provided to the player.

Thus, the play time is set according to the fee amount inserted by the player in the game machine for business, and the stage is selected so as to finish the game in a time approximately equal to this play time. Therefore, time and money can be effectively practically used in a game center.

Further, the computer program in the present invention is a computer program for executing data of a plurality of stages and providing a game comprising said plurality of stages to a player, wherein the game includes a desired time setting step for setting a desired time at which the player wants to play the game, and the game includes a stage selecting step for storing model times as standard times required to clear each of said stages, and selecting one or more stages such that the total of the model times of said one or more stages is closest to the desired time set by said desired time setting step, and the game comprising said one or more stages selected by said stage selecting step is provided to the player.

Further, one aspect of the present invention is characterized in that a flag showing importance is assigned to data of each stage and one or more stages of a high importance are preferentially selected in said stage selecting step.

Further, one aspect of the present invention is characterized in that a playing order of said plurality of stages is determined in the game, and the game holds a supplementary stage which corresponds to one or more continuous stages among said plurality of stages causing the inappropriateness in the game connection in a stage omitting case, and includes a standard time required for clearing shorter than that of this one or more continuous stages, and the game includes a supplementary stage insertion step for reading-out the data of said supplementary stage for dissolving the inappropriateness of this connection, and inserting these data between pertinent stages when the inappropriateness is caused in the game connection between the respective stages selected in said stage selecting step.

Further, one aspect of the present invention is characterized in that the desired time can be set before the game beginning and when playing the game and can be set a plurality of times when playing the game in said desired time setting step.

Further, one aspect of the present invention is characterized in that, when the game includes a step for calculating the difference between an elapsed playing time of the player and the total of the model times of stages cleared until the present stage, and again selecting one or more stages after said present stage such that the total of the model times of said one or more stages is closest to the remaining desired time obtained by subtracting said elapsed playing time from the desired time set by the player in the desired time setting step when the difference is a predetermined time or more.

Further, one aspect of the present invention is characterized in that the game further includes a model time correcting step for calculating the ratio of an elapsed playing time of the player to the total of the model times of stages cleared until the present stage after the game beginning, and changing the standard time of each stage to a time according to said ratio when the ratio reaches a predetermined ratio; and a stage reselecting step for again selecting one or more stages after said present stage using said stage selecting step such that the total of the model times changed by said model time correcting step of said one or more stages is closest to the remaining desired time obtained by subtracting said elapsed playing time from the desired time set in said desired time setting step.

Further, one aspect of the present invention is characterized in that the game further includes a notifying step for notifying the player when a difference of a predetermined time or more is caused between the elapsed playing time of the player and the total of the model times of stages cleared until the present stage.

Further, one aspect of the present invention is characterized in that display for urging resetting of the desired time is performed after the notification by said notifying step.

Further, the game method in the present invention is a game method of a game machine for storing a plurality of stages and providing a game comprising said plurality of stages to a player, and characterized in that standard times required to clear each of said stages are stored in advance; the player sets a desired time desirous to play the game; one or more stages are then selected such that the total of model times of said one or more stages is closest to said desired time; and the game comprising said one or more selected stage is provided to the player.

Further, one aspect of the present invention is characterized in that a flag showing importance is assigned to each of said plurality of stages and is stored and one or more stages of higher importance are preferentially selected in the selection of the stage.

Further, one aspect of the present invention is characterized in that the game having a determined playing order of said plurality of stages is provided to the player, and a supplementary stage is stored such that the supplementary stage corresponds to one or more continuous stages among said plurality of stages causing the inappropriateness in the game connection in a stage omitting case, and has a standard time required for clearing that is shorter than that for the one or more continuous stages, and the supplementary stage for dissolving the inappropriateness in this connection is read out when the inappropriateness is caused in the game connection between the respective stages selected in the selection of said stage, and the read-out supplementary stage is inserted between pertinent stages.

Further, one aspect of the present invention is characterized in that the playing time of the game can be set before the game beginning and when playing the game and can be set a plurality of times.

Further, one aspect of the present invention is characterized in that the difference between an elapsed playing time of the player and the total of the model times of stages cleared until the present stage is calculated, and one or more stages after said present stage are again selected such that the total of the model times of said one or more stages is closest to the remaining desired time obtained by subtracting said elapsed playing time from said desired time when the difference is a predetermined time or more.

Further, one aspect of the present invention is characterized in that the ratio of an elapsed playing time of the player to the total of the model times of stages cleared until the present stage is calculated after the game beginning, and the standard time of each stage is corrected to a time according to said ratio when the ratio reaches a predetermined ratio; and one or more stages after said present stage are again selected such that the total of said corrected model times of said one or more stages is closest to the remaining desired time obtained by subtracting said elapsed playing time from said desired time.

Further, one aspect of the present invention is characterized in that the difference between the elapsed playing time of the player and the total of the model times of stages cleared until the present stage is calculated, and notification is given to the player when the difference is a predetermined time or more.

Further, one aspect of the present invention is characterized in that display for urging resetting of the desired time is performed after said notification.

Further, the game distributing system of the present invention is a game distributing system for storing a game comprising a plurality of stages in a server and providing said game to a client connected via a communication line, and characterized in that said server comprises model time storage means for storing model times as standard times required to clear each of said stages every said stage; desired time setting means for setting a desired time at which a player wants to play the game; and stage selecting means for selecting one or more stages such that the total of the model times of said one or more stages stored in said model time storage means is closest to the desired time set by said desired time setting means, wherein said client receives the game comprising said one or more stages selected by said stage selecting means so that the game is provided to the player.

Further, another aspect of the present invention is characterized in that said stage selecting means assigns a flag showing importance to each stage and preferentially selects one or more stages of higher importance.

Further, one aspect of the present invention is characterized in that a playing order of said plurality of stages is determined in the game, and said server further comprises supplementary stage storage means for storing a supplementary stage which corresponds to one or more continuous stages among said plurality of stages causing the inappropriateness in the game connection in a stage omitting case, and has a standard time required for clearing that is shorter than that of the one or more continuous stages; and supplementary stage insertion means for reading the supplementary stage for dissolving the inappropriateness in this connection from said supplementary stage storage means, and inserting the supplementary stage between pertinent stages when the inappropriateness is caused in the game connection between the respective stages selected by said stage selecting means.

Further, one aspect of the present invention is characterized in that said desired time setting means can set the desired time before the beginning of the game and when playing the game, and can set the desired time a plurality of times when playing the game.

Further, another aspect of the present invention is characterized in that, when a difference of a predetermined time or more is caused between an elapsed playing time of the player and the total of the model times of stages cleared until the present stage, one or more stages after said present stage are again selected by said stage selecting means such that the total of the model times of said one or more stages is closest to the remaining desired time obtained by subtracting said elapsed playing time from the desired time set by said desired time setting means.

Further, another aspect of the present invention is characterized in that the game distributing system further comprises model time correcting means for calculating the ratio of an elapsed playing time of the player to the total of the model times of stages cleared until the present stage after the game beginning, and changing the standard time of each stage to a time according to said ratio when the ratio reaches a predetermined ratio; and stage reselecting means for again selecting one or more stages after said present stage by said stage selecting means such that the total of the model times changed by said model time correcting means of said one or more stages is closest to the remaining desired time obtained by subtracting said elapsed playing time from the desired time set by said desired time setting means.

Further, one aspect of the present invention is characterized in that the game distributing system further comprises notifying means for notifying the player when a difference of a predetermined time or more is caused between the elapsed playing time of the player and the total of the model times of stages cleared until the present stage.

Further, another aspect of the present invention is characterized in that displaying for urging resetting of the desired time is performed after the notification by said notifying means.

Further, the game machine in the present invention is a game machine for providing a game comprising a plurality of stages to a player, and comprises stage storage means for storing data of said plurality of stages; standard time storage means for storing a standard time corresponding to each of said plurality of stages; desired time setting means for setting a desired time for which said player wishes to play the game; stage selecting means for selecting at least one of said plurality of stages based on the desired time set by said player and the standard time stored in said standard time storage means correspondingly to each stage; and game executing means for providing the game comprising at least one of said plurality of stages selected by said stage selecting means based on the data stored in said stage storage means.

Further, the control method of the game machine in the present invention is a control method of a game machine for providing a game comprising a plurality of stages to a player, and characterized in that the game method comprises a desired time setting step for setting a desired time for which said player wishes to play the game; a stage selecting step for selecting at least one of said plurality of stages based on the desired time set by said player, and a standard time stored in standard time storage means storing the standard time thereto correspondingly to each of said plurality of stages; and a game executing step for providing the game comprising at least one of said plurality of stages selected in said stage selecting step to said player based on data stored in stage storage means storing the data of said plurality of stages thereto.

Further, the program in the present invention is a program for making a computer function as a game machine for providing a game comprising a plurality of stages to a player, wherein said computer functions as stage storage means for storing data of said plurality of stages; standard time storage means for storing a standard time correspondingly to each of said plurality of stages; desired time setting means for setting a desired time for which said player wishes to play the game; stage selecting means for selecting at least one of said plurality of stages based on the desired time set by said player and the standard time stored in said standard time storage means correspondingly to each stage; and game executing means for providing the game comprising at least one of said plurality of stages selected by said stage selecting means based on the data stored in said stage storage means. Said computer may be constructed from a home game machine, a game machine for business, a portable game machine, a portable telephone set, a portable information terminal (PDA), a personal computer, etc.

Further, the information recording medium in the present invention is an information recording medium readable by a computer and recording a program for making the computer function as a game machine for providing a game comprising a plurality of stages to a player, wherein said computer functions as stage storage means for storing data of said plurality of stages; standard time storage means for storing a standard time correspondingly to each of said plurality of stages; desired time setting means for setting a desired time for which said player wishes to play the game; stage selectingmeans for selecting at least one of said plurality of stages based on the desired time set by said player and the standard time stored in said standard time storage means correspondingly to each stage; and game executing means for providing the game comprising at least one of said plurality of stages selected by said stage selecting means based on the data stored in said stage storage means. Said computer is constructed by a home game machine, a game machine for business, a portable game machine, a portable telephone set, a portable information terminal (PDA), a personal computer, etc.

Further, the game distributing device in the present invention is a game distributing device communicating with a client terminal and providing a game comprised a plurality of stages to a player relating to said client terminal, and characterized in that the game distributing device comprises stage storage means for storing data of said plurality of stages; standard time storage means for storing a standard time correspondingly to each of said plurality of stages; desired time setting means for setting a desired time for which said player wishes to play the game; stage selectingmeans for selecting at least one of said plurality of stages based on the desired time set by said player and the standard time stored in said standard time storage means correspondingly to each stage; and game executing means for making said client terminal execute the game comprising at least one of said plurality of stages selected by said stage selecting means based on the data stored in said stage storage means.

Further, one aspect of the present invention is characterized in that said stage selecting means selects at least one of the a plurality of stages based on the difference between the desired time set by said player and the total of the standard times stored in said standard time storage means correspondingly to each selected stage.

Further, one aspect of the present invention is characterized in that said stage storage means stores importance information showing importance of each of said plurality of stages, and said stage selecting means selects at least one of said plurality of stages further based on said importance information.

Further, one aspect of the present invention is characterized in that the game machine further comprises supplementary object stage storage means for storing information for specifying a supplementary obj ect stage among said plurality of stages; and supplementary stage storage means for storing data of the supplementary stage correspondingly to said supplementary object stage, wherein said game executing means provides the game comprising the supplementary stage corresponding to the unselected supplementary object stage and at least one of said plurality of stages selected by said stage selecting means when said supplementary object stage is not selected by said stage selecting means.

Further, one aspect of the present invention is characterized in that the game machine further comprises play history storage means for storing a play history of said player, and the data of said supplementary stage include parameter information relating to the contents of the supplementary stage, and said game executing means comprises means for providing the game of the supplementary stage corresponding to said supplementary object stage based on the parameter information included in the data of the supplementary stage, and means for controlling the parameter information based on the play history stored in said play history storage means.

Further, one aspect of the present invention is characterized in that the game machine further comprises play history storage means for storing a play history of said player, wherein said supplementary stage storage means stores the data of a plurality of kinds of supplementary stages correspondingly to said supplementary object stage, and said game executing means selects one of the a plurality of kinds of supplementary stages corresponding to the unselected supplementary object stage based on the play history stored in said play history storage means, and provides the game comprising the selected supplementary stage and at least one of said plurality of stages selected by said stage selecting means when said supplementary object stage is not selected by said stage selecting means.

Further, one aspect of the present invention is characterized in that the game machine further comprises judging means for judging whether it is necessary to reselect the stage or not based on a time required to clear a predetermined stage and the standard time of the predetermined stage when the predetermined stage is cleared by said player; and stage reselecting means for selecting at least one of uncleared stages among said plurality of stages based on the remaining desired time obtained by subtracting an elapsed playing time till then from said desired time and the standard time stored in said standard time storage means correspondingly to each stage when it is judged by said judging means that reselection is required.

In this aspect, said judging means may judge whether the reselection of the stage is required or not by judging whether or not the difference between the time required to clear said predetermined stage and the standard time of the predetermined stage is a predetermined time or more. For example, when this difference is the predetermined time or more, the judging means may judge that reselection is required. Further, when this difference is less than the predetermined time, the judging means may judge that no reselection is required.

In this aspect, said stage reselecting means may select at least one of uncleared stages among said plurality of stages based on the difference between the remaining desired time obtained by subtracting the elapsed playing time till then from said desired time and the total of the standard times stored in said standard time storage means correspondingly to each selected stage.

Further, in this aspect, said judging means may judge whether the reselection of the stage is required or not by judging whether or not the ratio of the time required to clear the predetermined stage to the standard time of said predetermined stage is a predetermined ratio or more. For example, when this ratio is the predetermined ratio or more, the judging means may judge that reselection is required. In contrast to this, when this ratio is less than the predetermined ratio, the judging means may judge that no reselection is required.

Further, in this aspect, said stage reselecting means includes means for calculating the ratio of the time required to clear the predetermined stage to the standard time of said predetermined stage; and means for calculating a correcting standard time according to said ratio based on said ratio and the standard time stored in said standard time storage means, wherein said stage reselecting means may select at least one of uncleared stages among said plurality of stages based on the remaining desired time obtained by subtracting the elapsed playing time till then from said desired time, and the correcting standard time calculated with respect to each stage. For example, the stage reselecting means may select at least one of the uncleared stages among the plurality of stages based on the difference between the remaining desired time obtained by subtracting the elapsed playing time till then from said desired time and the total of the correcting standard times calculated with respect to each selected stage.

Further, one aspect of the present invention is characterized in that the game machine further comprise judging means for judging whether it is necessary to reselect the stage or not based on a elapsed playing time till then and the total of the standard times of stages cleared till then when a predetermined stage is cleared by said player; and stage reselecting means for selecting at least one of uncleared stages among said plurality of stages based on the remaining desired time obtained by subtracting said elapsed playing time from said desired time and the standard time stored in said standard time storage means correspondingly to each stage when it is judged by said judging means that reselection is required.

In this aspect, said judging means may judge whether the reselection of the stage is required or not by judging whether or not the difference between the elapsed playing time till then and the total of the standard times of the stages cleared till then is a predetermined time or more. For example, when this difference is the predetermined time or more, the judging means may judge that reselection is required. In contrast to this, when this difference is less than the predetermined time, the judging means may judge that no reselection is required.

Further, in this aspect, said stage reselecting means may select at least one of the uncleared stages among said plurality of stages based on the difference between the remaining desired time obtained by subtracting said elapsed playing time from said desired time and the total of the standard times stored in said standard time storage means correspondingly to each selected stage.

Further, in this aspect, said judging means may judge whether the reselection of the stage is required or not by judging whether or not the ratio of the elapsed playing time till then to the total of the standard times of the stages cleared till then is a predetermined ratio or not. For example, when this ratio is the predetermined ratio or more, the judging means may judge that reselection is required. In contrast to this, when this ratio is less than the predetermined ratio, the judging means may judge that no reselection is required.

Further, in this aspect, said stage reselecting means comprises means for calculating the ratio of the elapsed playing time till then to the total of the standard times of stages cleared till then; and means for calculating a correcting standard time according to said ratio based on said ratio and the standard time stored in said standard time storage means , wherein said stage reselecting means may select at least one of uncleared stages among said plurality of stages based on the remaining desired time obtained by subtracting said elapsed playing time from said desired time, and the correcting standard time calculated with respect to each stage. For example, the stage reselecting means may select at least one of the uncleared stages among said plurality of stages based on the difference between the remaining desired time obtained by subtracting said elapsed playing time from said desired time and the total of the correcting standard times calculated with respect to each selected stage.

Further, one aspect of the present invention is characterized in that the game machine comprises notifying means for notifying the contents of the reselection to said player when it is judged by said judging means that reselection is required.

Further, one aspect of the present invention is characterized in that said notifying means makes said player reset said desired time, and said stage reselecting means calculates said remaining desired time by subtracting the elapsed playing time till then from said desired time after the resetting.

Further, one aspect of the present invention is characterized in that said desired time setting means comprise means for making said player insert a play fee, and sets said desired time according to the amount of said play fee.

### BRIEF DESCRIPTION OF THE DRAWINGS

FIG. 1 is a block diagram of a game machine in an embodiment of the present invention.
FIG. 2 is a block diagram showing a constructional example according to the embodiment of the present invention.
FIG. 3 is a view showing the selection of a stage when a desired time is set to 120 minutes.
FIG. 4 is a view showing that one or more important stages are preferentially selected in the selection of the stage when the desired time is set to 120 minutes.
FIG. 5 is a view showing that a supplementary stage corresponding to an unselected stage is inserted.
FIG. 6 is a view showing reselection of the stage when 50 minutes have passed in the clearing of a stage A.
FIG. 7 is a view showing the correction of a model time when 15 minutes have passed in the clearing of the stage A, and the reselection of the stage based on the model time after the correction.
FIG. 8 is a flow chart showing processing performed by the game machine in the stage selection, and processing performed by the game machine in the insertion of the supplementary stage.
FIG. 9 is a flow chart showing processing performed by the game machine in the stage reselection.
FIG. 10 is a flow chart showing processing performed by the game machine in the stage reselection after the model time correction.
FIG. 11 is a view showing the relation of the selection (reselection) of the stage and the time (desired time and model time).
FIG. 12 is a block diagram showing a constructional example of a game distributing system according to the embodiment of the present invention.

### BEST MODE FOR CARRYING OUT THE INVENTION

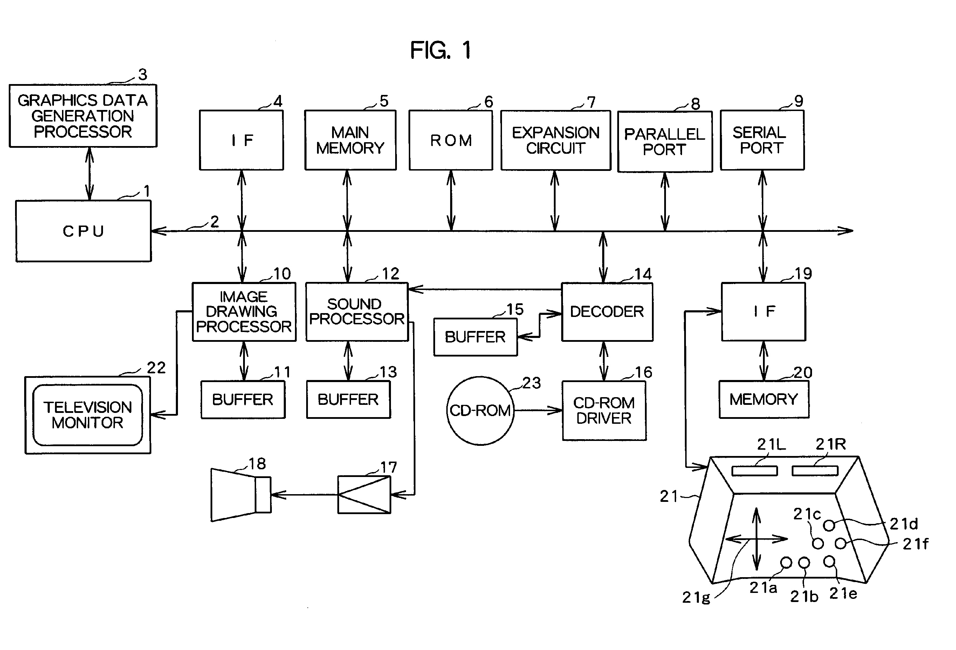

The embodiments in the present invention will next be explained based on the drawings. The construction of a game machine in this embodiment will first be explained. FIG. 1 is a block diagram showing the entire construction of the game machine. In FIG. 1, the game machine is constructed by a device main body and a controller 21. A CD-ROM 23 as a mechanically readable recording medium recording image data, sound data, a game program, etc. thereto is mounted to the device main body, and a monitor 22 is connected to the device main body.

The device main body is constructed by a CPU 1, a graphics data generation processor 3 directly connected to this CPU 1, an interface circuit 4 mutually connected to the CPU 1 through a bus (an address bus, a data bus and a control bus) 2, a main memory 5, a ROM 6, an expansion circuit 7, a parallel port 8, a serial port 9, an image drawing processor 10, a sound processor 12, a decoder 14, an interface circuit 19, a buffer 11 connected to the image drawing processor 10, a buffer 13 and an amplifying circuit 17 connected to the sound processor 12, a speaker 18 connected to this amplifying circuit 17, a buffer 15 and a CD-ROM driver 16 connected to the decoder 14, and a memory 20 connected to the interface circuit 19. The above controller 21 is connected to the interface circuit 19. The above monitor 22 is connected to the image drawing processor 10.

The graphics data generation processor 3 performs coordinate transformation processing and light source calculation processing by parallel processing. The coordinate transformation processing is processing for calculating an address in an area for display of a processing object image supplied from the CPU 1 based on the data of coordinates, the data of a moving amount and the data of a rotating amount of each vertex of the processing object image within a two-dimensional or three-dimensional plane, and again returning this address data to the CPU 1. Further, the light source calculation processing is processing for calculating the brightness of an image according to the vector data of a light beam, normal line data showing the direction of a polygonal face, and data showing the color of the polygonal face.

The interface circuit 4 is a circuit for the interface of a peripheral device, e.g., a pointing device, etc. such as a mouse, a track ball, etc. The ROM 6 stores program data as an operation system of the device main body. The main memory 5 is a memory for loading a game program and various kinds of data from the CD-ROM 23 thereto.

The expansion circuit 7 performs expansion processing with respect to a compressed image compressed by intra coding conformed to MPEG (Moving Picture Engineering Group) and JPEG (Joint Picture Engineering Group). The expansion processing is decode processing (data encoded by VLC: Variable Length Code are decoded), inverse quantization processing, IDCT (Inverse Discrete Cosine Transform) processing, restoration processing of the intra image, etc.

The image drawing processor 10 performs image drawing processing with respect to the buffer 11 based on an image drawing command issued by the CPU 1. The buffer 11 is constructed by the above area for display and an area for non-display. The area for display is a developing area of data displayed on the display screen of the television monitor 22. The area for non-display is a memory area of texture data, color palette data, etc. The texture data are two-dimensional image data. The color palette data are data for assigning the color of the texture data, etc. These texture data and color palette data are divided one or a plurality of times according to the advancing situation of the game and are read from the CD-ROM 23 and are stored in the non-display area of the buffer 11 in advance by the CPU 1.

For example, the image drawing command is an image drawing command for displaying a line, an image drawing command for drawing a normal two-dimensional image, or an image drawing command for drawing the image of a three-dimensional body (obj ect) by using a polygon, etc. The polygon is a polygonal two-dimensional image and each vertex of this polygonal shape constitutes a polygon vertex. The object artificially three-dimensionally displayed on the display face of the television monitor 22 is normally formed as an aggregate of a plurality of polygons.

The image drawing command for drawing the image of a line is constructed by data showing an image drawing starting address and an image drawing ending address of the line, and data showing a color and the drawn line. This line image drawing command is directly issued by the CPU 1 to the image drawing processor 10.

The image drawing command for drawing the image of the three-dimensional object by using the polygon is constructed by polygon vertex address data showing the address of each vertex of the polygon forming the body (object) in the area for display in the buffer 11, texture address data showing the memory position of the texture data stuck to the polygon in the area for non-display in the buffer 11, color palette address data showing the memory position of the color palette data showing the color of the texture data in the area for non-display in the buffer 11, and brightness data showing the brightness of the texture. The polygon vertex address data are coordinate data obtained by coordinate-transforming absolute coordinate data of the polygon vertex in a virtual three-dimensional space received from the CPU 1 by the graphics data generation processor 3 based on the moving amount data and the rotating amount data received from the CPU 1.

The image drawing command for drawing the normal two-dimensional image is constructed by vertex address data, texture address data, color palette address data and brightness data showing the brightness of the texture. The vertex address data are coordinate data obtained by coordinate-transforming the vertex coordinate data in a plane received by the graphics data generation processor 3 from the CPU 1 based on the moving amount data received from the CPU 1.

The sound processor 12 converts PCM sound data read from the CD-ROM 23 into ADPCM data. Further, the ADPCM data processed by the sound processor 12 are outputted from the speaker 18 as sound.

The CD-ROM driver 16 reads a game program, data of map information, etc., image data and sound data from the CD-ROM 23, and supplies the read game program and data to the decoder 14.

The decoder 14 performs error correction processing using ECC (Error Correction code) with respect to regenerating data from the CD-ROM driver 16, and supplies the data obtained by performing the error correction processing to the main memory 5 or the sound processor 12.

The memory 20 is a memory of a card type, and stores various kinds of parameters at a game interrupting time to hold a state at the game interrupting time. The controller 21 has a cross key 21g constructed by integrating a left key, a right key, an up key and a down key, a left button 21L, a right button 21R, a start button 21a, a select button 21b and first to fourth buttons 21c to 21f. Here, the cross key 21g is a key for giving commands showing up, down, left and right to the CPU 1 by the game player.

The start button 21a is a key for giving the instructions of start of execution of a game program loaded from the CD-ROM 23 to the CPU 1 by the game player. The select button 21b is a key for giving the instructions of various kinds of selections relating to the game program loaded onto the main memory 5 to the CPU 1 by the game player. The functions of the left button 21L, the right button 21R and the first to fourth buttons 21c to 21f are different according to the game program loaded from the CD-ROM 23.

The operation of the above game machine is summarized as follows. Namely, when the CD-ROM 23 is mounted to the device main body and the power source of the device main body is turned on, the CPU 1 gives instructions for reading the image data, the sound data, the game program and various kinds of data from the CD-ROM 23 to the CD-ROM driver 16 based on an operating system recorded in the ROM 6. Thus, the CD-ROM driver 16 reads the image data, the sound data, the game program data, etc. from the CD-ROM 23, and supplies these data to the decoder 14. The decoder 14 performs the error correction processing with respect to the supplied image data, sound data, game program, etc.

The image data obtained by performing the error correction processing by the decoder 14 are supplied to the expansion circuit 7 through the bus 2. The expansion circuit 7 performs expansion processing with respect to the supplied image data, and supplies these image data to the image drawing processor 10 through the bus 2. The image drawing processor 10 writes the supplied image data into the area for non-display in the buffer 11. Further, the sound data obtained by performing the error correction processing by the decoder 14 are supplied to the main memory 5 or the sound processor 12 through the bus 2, and are written into the main memory 5 or the buffer 13. The game program obtained by performing error correction processing via the decoder 14 is supplied to the main memory 5 through the bus 2 and is written into the main memory 5.

Thereafter, the CPU 1 advances the game based on the game program recorded to the main memory 5 or commands inputted through the controller 21 by the game player. Namely, the CPU 1 suitably performs the control of image processing, the control of sound processing, or the control of internal processing, etc. based on the game program or instruction contents from the game player. Here, for example, the control of the image processing is constructed by issuing a coordinate transformation processing command or a light source calculation processing command, etc. with respect to the graphics data generation processor 3, and issuing various kinds of image drawing processing commands with respect to the image drawing processor 10, etc. For example, the control of the sound processing is constructed by issuing a sound output command with respect to the sound processor 12, and assigning a level or a reverb, etc. For example, the control of the internal processing is constructed by an arithmetic calculation according to the operation of the controller 21, etc.

Here, the operation of the game machine in a case in which the image of the three-dimensional body (object) using a polygon is displayed in the television monitor 22, will be explained as an example of the control of the image processing. Namely, a table for storing the absolute coordinate data of the polygon forming the above object, the rotating amount data of the object, and the moving amount data of the object is made in the main memory 5 in advance. Further, a table for storing the above texture address data and the color palette address data is made in the main memory 5.

Next, the CPU 1 reads the rotating amount data of the object, the moving amount data of the object and the absolute coordinate data of the polygon from the above table, and transfers these data to the graphics data generation processor 3. Next, the graphics data generation processor 3 converts the absolute coordinate data of the polygon into polygon vertex address data based on the transferred rotating amount data of the obj ect and the moving amount data of the object. Subsequently, the graphics data generation processor 3 transfers the generated polygon vertex address data to the CPU 1.

Next, the CPU 1 reads the texture address data and the color palette address data from the above table, and transfers these data and the polygon vertex address data to the image drawing processor 10.

Next, the image drawing processor 10 sets the range of a polygon face (the range surrounded by a straight line connecting the vertexes of the polygon to each other) in the area for display in the buffer 11 based on the polygon vertex address data. Subsequently, the image drawing processor 10 reads the texture data corresponding to the polygon vertex address data, and the color palette data from the area for non-display in the buffer 11 based on the texture address data and the color palette address data. Subsequently, the image drawing processor 10 writes the read image drawing data into the set range of the polygon face. This processing is generally called "sticking of texture". Thus, the display image data of the object are stored in the area for display in the buffer 11. The image drawing processor 10 outputs the memory contents (display image data) of the area for display in the buffer 11 to the television monitor 22.

The game program, the image data, the sound data, etc., for executing the RPG by the game machine are recorded to the above CD-ROM 23. The RPG is executed by executing the game program by the CPU 1 of the game machine.

The summary of the RPG according to this embodiment will next be explained. The game world of the RPG is displayed in the monitor 22 by executing the game program stored in the CD-ROM 23 by the game machine. The leading character S (hereinafter called "leading character S") of a story in this game world is also displayed. The leading character S can move in the game world as a result of the game player operating the controller 21. The game player becomes the leading character S of the story in the game world and can develop the story by moving the leading character S in the game world and clearing each stage (event).

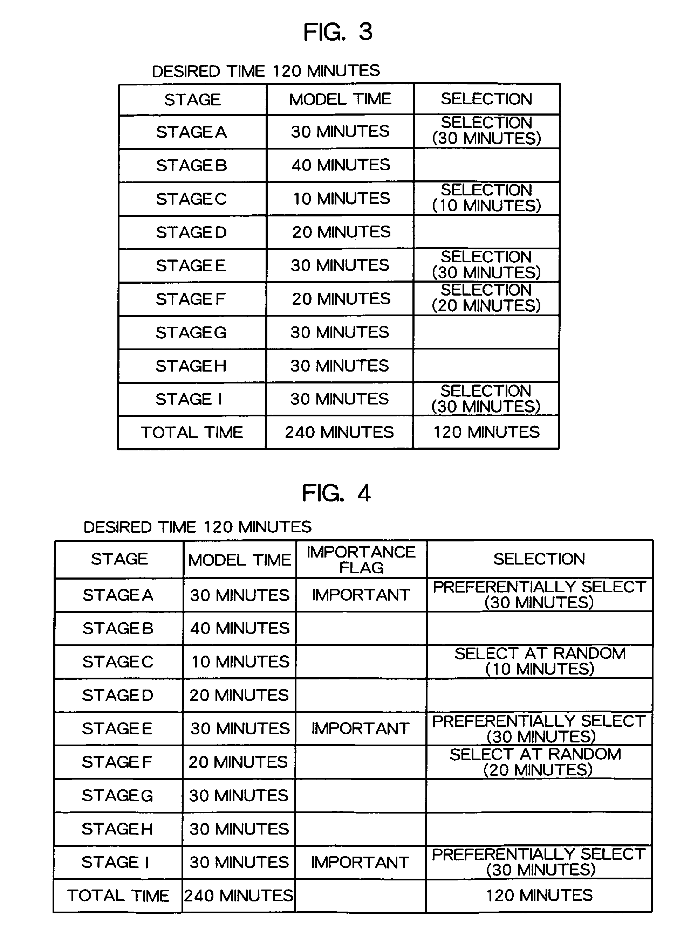

This RPG is constructed in the order of stages A to I. The game is finished when the final stage I is cleared (cleared). The game is normally finished by clearing all the stages in this order. It is supposed that the game is normally finished in 240 minutes with respect to this RPG. This time of 240 minutes is a total of the model times of the respective stages. Here, the model time is a standardizing (standard) time considered to be necessary for an average player to clear the stage, and is set in advance by a game maker in consideration of a degree of difficulty of the stage, etc. In the example of FIG. 3, stage A is set to 30 minutes in advance and stage B is set to 40 minutes in advance and stage C is set to 10 minutes in advance, etc.

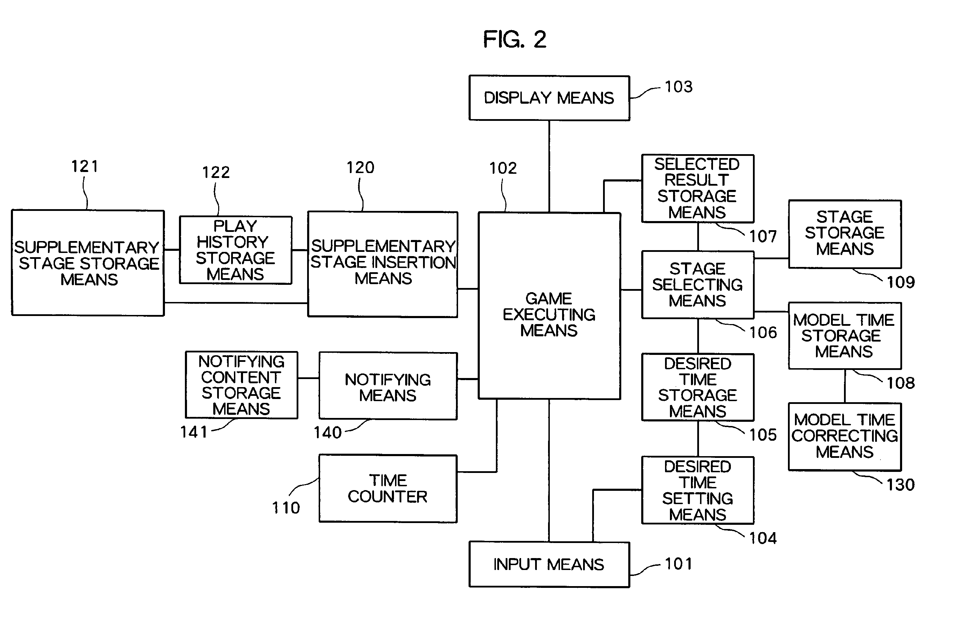

The selection of the stage in the RPG of this embodiment will next be explained based on FIG. 2. An input means 101 of FIG. 2 is a controller for the game machine and corresponds to a controller 21 of FIG. 1. A game executing means 102, a desired time setting means 104 and a stage selecting means 106 correspond to the CPU 1 of FIG. 1. A display means 103 corresponds to the monitor 22 of FIG. 1. A model time storage means 108 and a stage storage means 109 correspond to the CD-ROM 23 and the main memory 5 of FIG. 1. A desired time storage means 105 and a selected result storage means 107 correspond to the main memory 5 of FIG. 1. FIG. 2 is a block diagram relating to characteristic control of the present invention, and control common to the normal game machine is omitted since this control is obvious to a person skilled in the art.

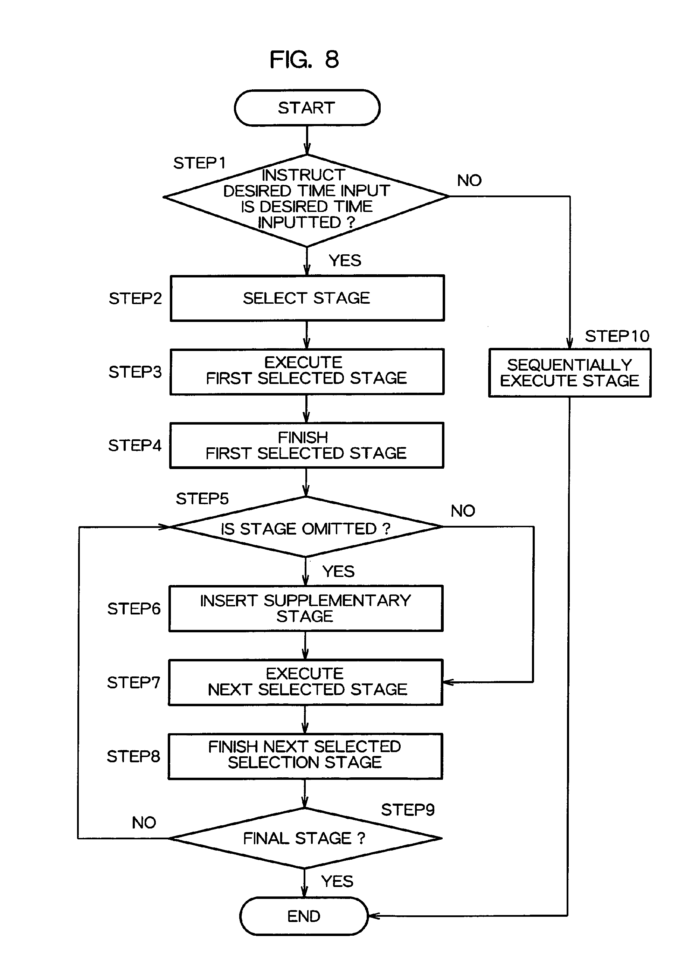

When the RPG is started, the setting of a desired time is executed by the desired time setting means 104 before the first stage A is executed (STEP1 in FIG. 8). Thus, a time desirous for the player to play the RPG is set. For example, the desired time setting means 104 guides the player so as to input the desirable playing time of the game, and makes the player set the desirable playing time of the game. In this case, for example, the display means 103 displays "In how many hours is this game finished ?", etc. Otherwise, a shortest assignable time may be also simultaneously displayed. For example, a time shorter than the model time of at least one stage may be set so as not to be assigned, and a time shorter than the total of the model times of the plurality of stages required at its minimum to enjoy the game can be set so as not to be settable. Further, for example, a format for selecting the desired time may be also used by displaying "Please select desired time from (1) 120 minutes, (2) 150 minutes and (3) 200 minutes.", etc. At this time, the player can input the time desired by the player by the input means 101. It is also possible to set the game machine such that no player sets the desired time. When no desired time is set, the game is normally executed in the order of stages A to I (STEP 10 in FIG. 8).

Here, it is assumed that the player sets the desired time to 120 minutes. Thus, the desired time storage means 105 stores this desired time of 120 minutes.

Next, the stage selecting means 106 recognizes (reads) the time of 120 minutes stored in the desired time storage means 105, and selects the stage so as to be adapted to this 120 minutes (STEP2 in FIG. 8). In this case, the stage selecting means 106 selects the stage based on the desired time (120 minutes) and the model time of each stage. For example, the stage may be selected based on the difference between the desired time (120 minutes) and the total of the model times of the respective stages. Further, for example, the game machine may be set such that the total of the model times of the respective stages becomes a time closest to 120 minutes. Further, the game machine may be also set such that the total becomes the closest time in a range not exceeding 120 minutes. Further, the game machine may be also set such that the total becomes a time of 120 minutes or less. The stage may be also selected such that the difference between the desired time (120 minutes) and the total of the model times of the respective stages lies within a predetermined time. Such setting is suitably performed by a game maker by the even balance of kinds and contents of the game and the model time.

Each stage (data relative to each stage) is stored in the stage storage means 109, and the model time (information showing the model time) of each stage is stored in the model time storage means 108. For example, information for discriminating each stage, information relative to the order of each stage, data for executing the game of each stage, etc. are stored in the stage storage means 109. For example, a table shown in FIG. 3 is stored in the stage storage means 109 and the model time storage means 108. As can be seen from this figure, each stage and its model time are correspondingly stored (the model time of each stage is stored so as to correspond to the information for discriminating each stage).

In this embodiment, the stage selecting means 106 selects a combination of the stages in which the total of the model times is approximately equal to the desired time or less. The stage (stages A, C, E, F, I) noted as "selection" in the rightmost item "selection" of FIG. 3 shows that this selection is made by the stage selecting means 106. The model time of the stage A is set to 30 minutes, the model time of the stage C is set to 10 minutes, the model time of the stage E is set to 30 minutes, the model time of the stage F is set to 20 minutes, and the model time of the stage I is set to 30 minutes. The total of these model times is set to 120 minutes equal to the desired time. For example, the stage selecting means 106 calculates the total of the model times with respect to each of all the combinations of the stages stored in the stage storage means 109, and may select at random one of the combinations in which the total of the model times is the desired time or less, or the difference between the total of the model times and the desired time lies within a predetermined time. At this time, a largest total of the model times may be selected and a largest stage number may be also selected instead of making the selection at random.

When the selection of the stage is finished, the selected stage and the order for providing this selected stage to the player are stored in the selected result storage means 107. For example, information for discriminating the selected stage is stored in the selected result storage means 107. In this case, the selected result storage means 107 may store only the discriminating information of the selected stage. Further, the selected result storage means 107 may also correspondingly store information for discriminating each stage stored in the stage storage means 109, and information showing whether each stage is selected or not (omitted or not). Further, the selected result storage means 107 stores the information showing the order (order in the game) provided to the player of the stage so as to correspond with the information for discriminating the stage.

The game executing means 102 sequentially executes the game relative to the selected stage based on the stored contents of the selected result storage means 107, and makes the display means 103 display its game screen (STEP3 in FIG. 8). Namely, the game executing means 102 sequentially executes the game relative to each stage while the game executing means 102 reads data relative to the selected stage from the stage storage means 109 in predetermined timing based on the contents stored in the selected result storage means 107.

Next, the case that the importance of the stage is set in the selection of the stage will be explained. This importance is set by a game maker to intend that the player clears the stage at the minimum so as not to lose interest of the game. Various cases are considered in setting the importance. For example, the importance can be highly set at a grapple stage for a player who likes a battle against an enemy. Otherwise, it is also considered that the importance is dispersively set so as to equally make the selection in the entire game such that only the first half stage of the game is not fixedly selected when the stage is selected.

Information showing the importance of each stage may be stored in the stage storage means 109. For example, the value of a parameter showing importance may be stored corresponding to each stage (information for discriminating each stage), and a flag may be also given with respect to the stage of a predetermined importance or more. In this embodiment, the importance flag is given to a stage of high importance (important stage) and is stored in the stage storage means 109.

The stage selecting means 106 selects the stage based on information showing the importance of each stage. In this embodiment, the stage selecting means 106 judges whether this importance flag is given in the selection of the stage, and preferentially selects the stage having the importance flag. Thereafter, the stage selecting means 106 selects a stage (arbitrary selecting stage) except for the important stage.

For example, the stage selecting means 106 calculates the total of the model times with respect to each of all the combinations constructed by the stage having the importance flag, and selects a combination in which the total of the model times is the desired time or less, or the difference between the total of the model times and the desired time lies within a predetermined time and the total of the model times is largest. The stage selecting means 106 then calculates a time (remaining time) obtained by subtracting the desired time from the total of the model times relating to this combination. Further, the stage selecting means 106 calculates the total of the model times with respect to each of all combinations constructed with stages having no importance flags, and selects a combination in which the total of the model times is the remaining time or less, or the difference between the total of the model times and the remaining time lies within a predetermined time and the total of the model times is largest. The stage selecting means 106 then selects a stage relative to the combination selected as above.

Further, for example, when the importance is shown by the parameter value, the stage selecting means 106 may calculate the total of the model times and the total of the importances with respect to each of all the combinations of the stages stored in the stage storage means 109, and may also select a combination in which the total of the model times is the desired time or less, or the difference between the total of the model times and the desired time lies within a predetermined time and the total of the importances is largest.

In the example of FIG. 4, since stages A, E, I are set as important stages, the stage selecting means 106 preferentially selects these stages. Since the model time of stage A constituting an important stage of the RPG is set to 30 minutes, and the model time of stage E is set to 30 minutes, and the model time of the stage I is set to 30 minutes, the total of the model times of the important stages becomes 90 minutes.

As a preferential selected result of these stages, the important stages occupy 90 minutes within the desired time (120 minutes). Accordingly, the stage selecting means 106 selects the arbitrary selecting stage such that the total of the model times is close to 30 minutes obtained by subtracting this 90 minutes from the desired time (120 minutes).

The example of FIG. 4 shows that the stage selecting means 106 selects the stage C (10 minutes) and the stage F (20 minutes) among the arbitrary selecting stages.

Information for discriminating the selected stages A, C, E, F, I and information showing their order are stored in the selected result storage means 107. The game executing means 102 sequentially executes the game relating to the selected stages based on the contents stored in the selected result storage means 107, and makes the display means 103 display its game screen.

When the selection is made as mentioned above, stages B, D, G, H are omitted. There is a case in which the contents of a story are jumped by omitting these stages in this way, or a contradiction is caused. For example, when an item originally obtainable at only the stage B is automatically obtained at a subsequent stage although the stage B is omitted and is not cleared, no player can understand how this item is obtained so that the story is jumped.

A replacing stage (hereinafter called a "supplementary stage") for avoiding such jump and contradiction of the story may be also prepared. Namely, the stage B is omitted in the above example, but a short stage is inserted instead of the stage B in this case after the clearing of the stage A and before the provision of the stage C.

For example, it is assumed that the player searches a "magician" by originally operating the leading character S at the stage B, and obtains an item "magic wand" indispensable to the termination of the game. However, since the stage B is not selected but is omitted, no player can obtain this indispensable item. In this case, when the stage C is provided to the player, this item may be automatically possessed by the leading character S. However, no player can understand how this item is obtained, thereby causing a jump in the story. Therefore, the short story that the leading character S encounters the "magician" on the roadside on the way of a movement from a village to another village and the "magician" entrusts the item "magic wand" to the leading character S, is prepared as a supplementary stage of the stage B. This supplementary stage is provided to the player after the clearing of the stage A and before the provision of the stage C.

Thus, even when the stage B is omitted, the story can be set so as not to be jumped by inserting the supplementary stage of contents for obtaining effects similar to those of the clearing of the stage B as a result. The supplementary stage may be set such that the player operates the leading character S, and may be also set to a so-called movie in which no player substantially operates the leading character S.

The insertion of the supplementary stage will next be explained. When a supplementary stage insertion means 120 corresponding to the CPU 1 in FIG. 1 recognizes that the executed stage A is cleared, the supplementary stage insertion means 120 confirms the next stage C to be executed with reference to the selected result storage means 107. When the supplementary stage insertion means 120 confirms that there is an omitted stage B between the stage A executed until the present time and the next stage C to be executed, the supplementary stage insertion means 120 reads data relating to a supplementary stage b for supplementing this omitted stage from a supplementary stage storage means 121 (STEP6 in FIG. 8). The game executing means 102 makes the display means 103 display the game screen relating to the supplementary stage b based on the read data (STEP7 in FIG. 8).

For example, information for specifying a supplementary object stage is stored in the supplementary stage storage means 121. The supplementary object stage is a stage required for supplementary when no selection is made by the stage selecting means 106. All the stages may be set to supplementary object stages and only partial stages may be also set to supplementary object stages. Information for discriminating each of the supplementary object stages may be stored as the information for specifying the supplementary object stage. Further, information (flag) showing whether it is the supplementary object stage or not may be also stored correspondingly to the information for discriminating each stage.

For example, data of the supplementary stage (information for discriminating each supplementary stage, data for executing the game of each supplementary stage, data for playing the movie, etc.) are stored in the supplementary stage storage means 121 so as to correspond to the information for discriminating each stage as the supplementary object stage. One supplementary stage may be prepared with respect to a combination of a plurality of supplementary obj ect stages. When a certain stage is omitted and the supplementary stage corresponding to this omitted stage exists, the supplementary stage insertion means 120 and the game executing means 102 read the data of the supplementary stage and execute the game of the supplementary stage or play the movie of the supplementary stage based on these data.

When the game executing means 102 confirms that the game, etc. relating to the supplementary stage b is finished, the game executing means 102 reads data relating to the next stage C to be executed from the stage storage means 109 and makes the display means 103 display the game screen relating to the stage C (STEP8 in FIG. 8).

As a means for confirming whether there is an omitted stage by the supplementary stage insertion means 120, an omitting flag is first given with respect to an unselected stage in the stage selection and is stored in the selected result storage means 107 together with the selected stage and its order such that the supplementary stage insertion means 120 can confirm whether there is an omitted flag in the confirmation of the selected stage and its order. For example, information showing the order of each stage and information showing whether each stage is selected or not (whether each stage is omitted or not) are stored in the selected result storage means 107 correspondingly to the information for discriminating each stage stored in the stage storage means 109. The supplementary stage insertionmeans 120 judges whether it is an omitted stage or not based on this information.

The contents of the supplementary stage may be changed according to a play history performed by the player till then. For example, it is assumed that there is an item of "shining stone" in this RPG. This item is numerously prepared at each stage. As this item is collected, the restoration of body strength of the leading character S is hastened. However, this item is not indispensable to clearing the stage. When the player excels at a ratio of collecting this item "shining stone" at the stage A, there is a high possibility that the player will also collect a large amount of the item "shining stone" at stage B if stage B is not omitted. In consideration of the play history of such a player, the contents of the supplementary stage b inserted between the stage A and the stage C are changed. Namely, the contents of the normal supplementary stage b are limited to the content that "the leading character S encounters the "magician" on the roadside when going from a village to another village and the "magician" entrusts the item "magic wand" to the leading character S." However, in addition to this, the inserted title of "obtaining "shining stone"" is added.

In the processing of a change of the supplementary stage, a play history storage means 122 corresponding to the main memory 5 in FIG. 1 first stores an obtaining number of the "shining stone" obtained by the player as a play history. When the stage A is then cleared and the supplementary stage insertion means 120 confirms that there is the omitted stage B between the stage A executed until the present time and the next stage C to be executed, the supplementary stage insertion means 120 reads data relating to the supplementary stage b for supplementing the omitted stage from the supplementary stage storage means 121. Simultaneously, the supplementary stage insertion means 120 confirms the play history of obtaining a predetermined amount of the item "shining stone" or more with reference to the play history storage means 122. The supplementary stage insertion means 120 receives this history and adds the character of "obtaining the "shining stone"" to an insert title portion of the supplementary stage b before the supplementary stage b is inserted. The game executing means 102 receives the completion of this addition and displays the screen relating to the supplementary stage b in the display means 103.

As mentioned above, the supplementary stage insertion means 120 changes the contents of the inserted supplementary stage based on the play history (information relating to the play history) stored in the play history storage means 122. For example, the play history may be set to the value of a specific parameter, information showing a game result, information showing a cleared stage, etc.

For example, the contents of the supplementary stage are set to be changed according to the value of the specific parameter and the value of the specific parameter may be changed (controlled) according to the play history so as to change the contents of the supplementary stage according to the play history. The relation of the value of the specific parameter and the play history may be set so as to be stored in a predetermined storage means as a table or a function.

With respect to the stage (stage able to be omitted) as a supplementary object, plural supplementary stages of different contents may be prepared. For example, the data of a plurality of kinds of supplementary stages may be stored in the supplementary stage storage means 121 correspondingly to one stage. In this case, the data of each supplementary stage are set such that a condition relating to the play history corresponds to the data of each supplementary stage. Namely, plural combinations of the condition relating to the play history and the data relating to the supplementary stage are stored in the supplementary stage storage means 121 so as to correspond to one stage.

When a predetermined stage is omitted, the supplementary stage insertion means 120 selects a supplementary stage corresponding to the condition satisfied with respect to the play history stored in the play history storage means 122 among the plurality of kinds of supplementary stages corresponding to the predetermined stage.

The setting of a desired time is not limited to before the beginning of the game, but can be also performed after the beginning of the game. Here, it is assumed that the player further wants to play the game for about 150 minutes, and sets the desired time after the game beginning when the stage A is cleared. The setting of the desired time after the game beginning will next be explained.

When the desired time is set when playing the game, the player first pushes a predetermined button of the input means 101 and interrupts the game. The game executing means 102 receives this interruption command and interrupts the game, and the desired time setting means 104 executes the setting of the desired time. At this time, the display means 103 displays "Please input desired time", etc. When the player sets the desired time to 150 minutes using the input means 101, the desired time storage means 105 stores this desired time of 150 minutes.

Next, the stage selecting means 106 reads the desired time of 150 minutes stored in the desired time storage means 105, and selects one or more stages such that the total of model times is close to this desired time (150 minutes). The already cleared stage such as the stage A is not set to a selecting object. Whether each stage is already cleared or not is stored in the selected result storage means 107. For example, information showing whether each stage is already cleared or not is stored in the selected result storage means 107 so as to correspond to information for discriminating each stage. In this case, the game executing means 102 updates the memory contents of the selected result storage means 107 every clearing of each stage.

The stage is selected by the stage selecting means 106. In this case, the stage is selected with an uncleared stage as an object similarly to a case in which the stage is selected at the game beginning time. Here, a combination of stages of total model time equal to about 150 minutes or less is selected. For example, the stage selecting means 106 selects stages C, E, F, G, H, I. In this case, the model time of the stage C is set to 10 minutes, the model time of stage E is set to 30 minutes, the model time of the stage F is set to 20 minutes, the model time of the stage G is set to 30 minutes, the model time of the stage H is set to 30 minutes, and the model time of the stage I is set to 30 minutes. The total of these model times becomes 150 minutes, equal to the desired time.

When the selection of the stage is finished, the information for discriminating the selected stage and information showing an order for providing this information to the player are stored in the selected result storage means 107. Namely, the memory contents of the selected result storage means 107 are updated.

The game executing means 102 then sequentially executes the game relating to the selected stage based on the memory contents of the selected result storage means 107, and makes the display means 103 display its game screen.

There is a difference of a certain degree in an advancing degree of the game according to a skill degree of the player. Namely, if the player is a skilled person, the player can collect information from villagers within the game world by operating the leading character S, and can estimate what should be done at that stage to a certain extent. Therefore, time taken to clear the stage is shortly set. In contrast to this, in the case of a beginner, no player can understand well what should be done every stage. Therefore, there is a case in which it takes time to clear the stage. It is also necessary to consider such an individual difference of the stage clearing time.

Therefore, the actually elapsed time is subtracted from the desired time, and the remaining time of the desired time is calculated. One or more stages after the present stage may be also again be selected so as to be adapted to this remaining desired time.

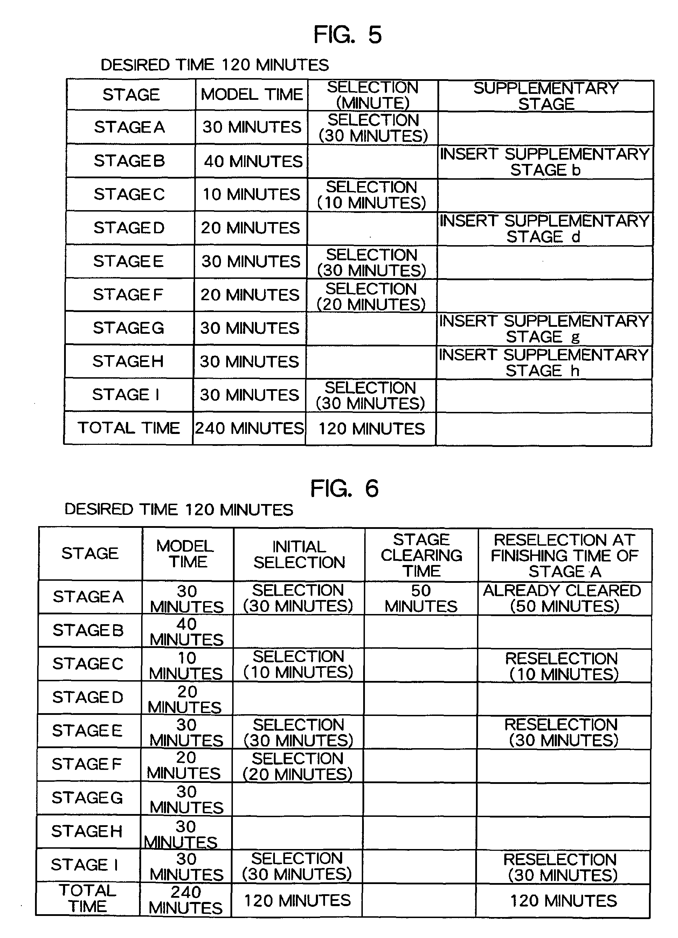

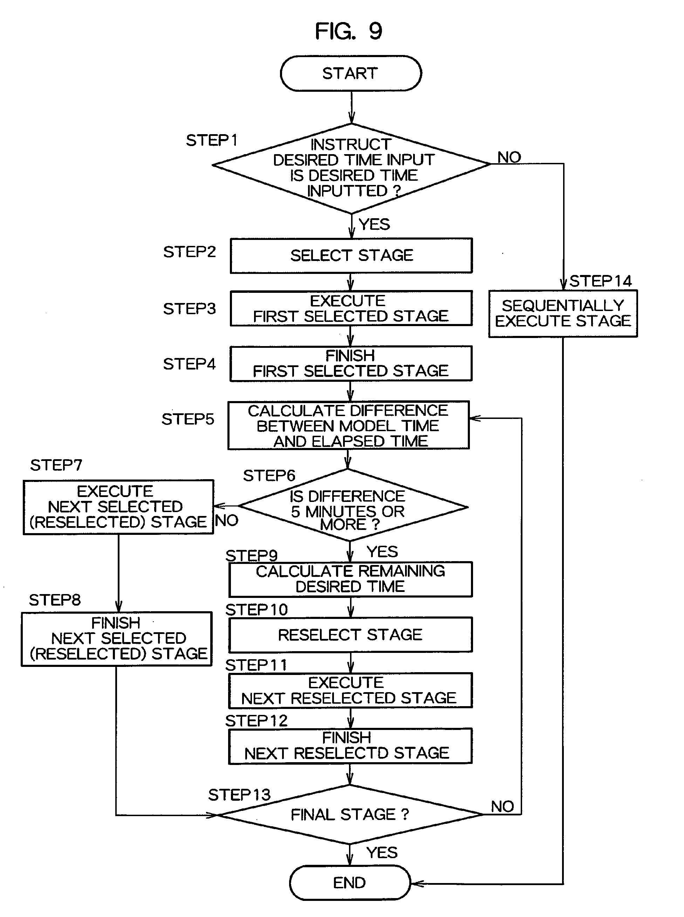

The reselection of the stage will next be explained. First, the game machine has a time counter 111 and counts the time required to clear the stage. The game executing means 102 refers to the counted elapsed time. The example of FIG. 6 shows that the time of 50 minutes is required to clear the stage A since the player is a beginner. Since the model time of the stage A is 30 minutes, the game executing means 102 confirms that the stage clearing time is longer by 20 minutes than the model time at the clearing time of the stage A (STEP5 of FIG. 9).

This game is set by a game maker in advance such that the stage is reselected when a difference of a predetermined time, e. g. , five minutes or more is caused between the model time and the actual elapsed time for the stage clearing. The reasons for this setting are as follows. Namely, for example, when the time difference is less than five minutes, there is no large influence on termination in a time approximately equal to the desired time. On the other hand, when a time difference of five minutes or more is caused, it is expected that a large time difference is caused with respect to the desired time. Therefore, it is considered that there is a possibility that no termination is performed in the time approximately equal to the desired time. In the example of FIG. 6, since a difference of 20 minutes is caused, the game executing means 102 (stage reselecting means) executes the reselection of the stage (Step 6 of FIG. 9).

Thus, the stage reselectingmeans calculates the difference between the elapsed time from the game beginning and the total of the model times of stages cleared till then. When this difference is judged as a predetermined time or more, the stage reselecting means may execute the reselection of the stage. Otherwise, when a predetermined stage is cleared by the player, the stage reselecting means may calculate the difference between the time required to clear this predetermined stage and the model time of this predetermined stage, and may also execute the reselection of the stage when this difference is judged as a predetermined time or more. Further, the stage reselecting means may calculate the difference between the elapsed time from the previous stage (reselecting) selecting time and the total of the model times of stages cleared during this elapsed time, and may also execute the reselection of the stage when this difference is judged as a predetermined time or more.

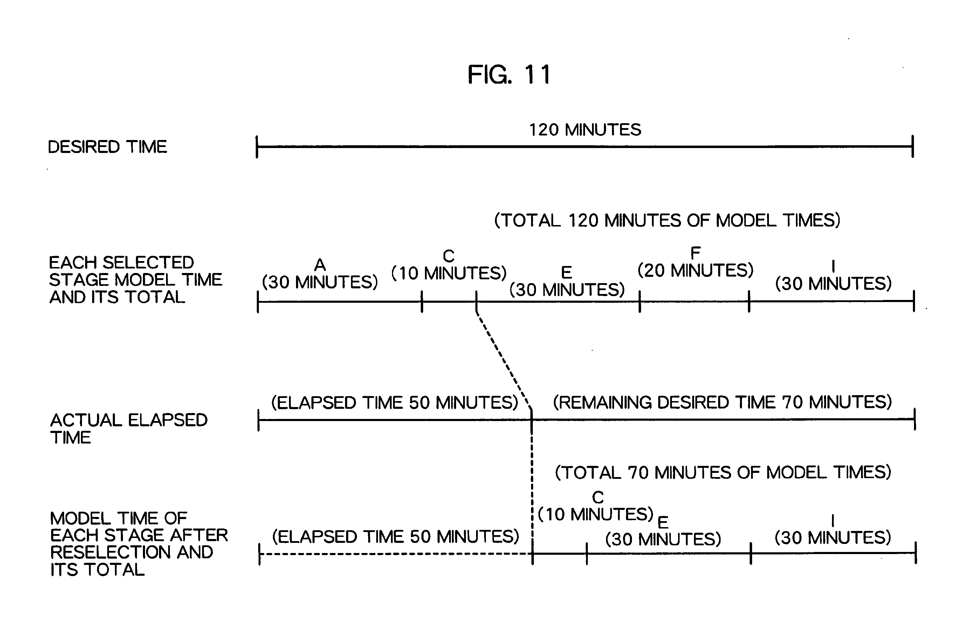

The game executing means 102 (stage reselecting means) subtracts the actual elapsed time (50 minutes) from the desired time (120 minutes), and calculates the remaining desired time (70 minutes) (see FIG. 11). Next, the stage selectingmeans 106 (stage reselecting means) again selects a combination of stages from stages B to I such that the total of the model times is close to this remaining desired time of 70 minutes. At this time, the already cleared stage is set to be outside the object of the stage selection (STEP9 of FIG. 9). It is also preferable to remove the stage at which the supplementary stage is provided from the object of the stage selection. In this case, it is preferable to use the model time of the supplementary stage in the calculation of the total of the model times.

The example of FIG. 6 shows that the stage selecting means 106 selects three stages constructed by stage C (10 minutes), stage E (30 minutes) and stage I (30 minutes). The total of the model times of these three stages is 70 minutes and is adapted to the remaining desired time 70 minutes.

When the stage selection is finished, information for discriminating the selected stage and information showing an order for providing the selected stage to the player are stored in the selected result storage means 107. Namely, the memory contents of the selected result storage means 107 are updated.

The game executing means 102 sequentially executes the game relating to the reselected stage based on the memory contents of the selected result storage means 107, and makes the display means 103 display its game screen (STEP10 of FIG. 9).

When an important stage is set, the important stage may be preferentially selected in the reselection of the stage.

The reselection of the stage explained above may be made every clearing of each stage until the final stage (STEP12 of FIG. 9). Further, the stage reselection may be also made only when a specific stage is cleared.

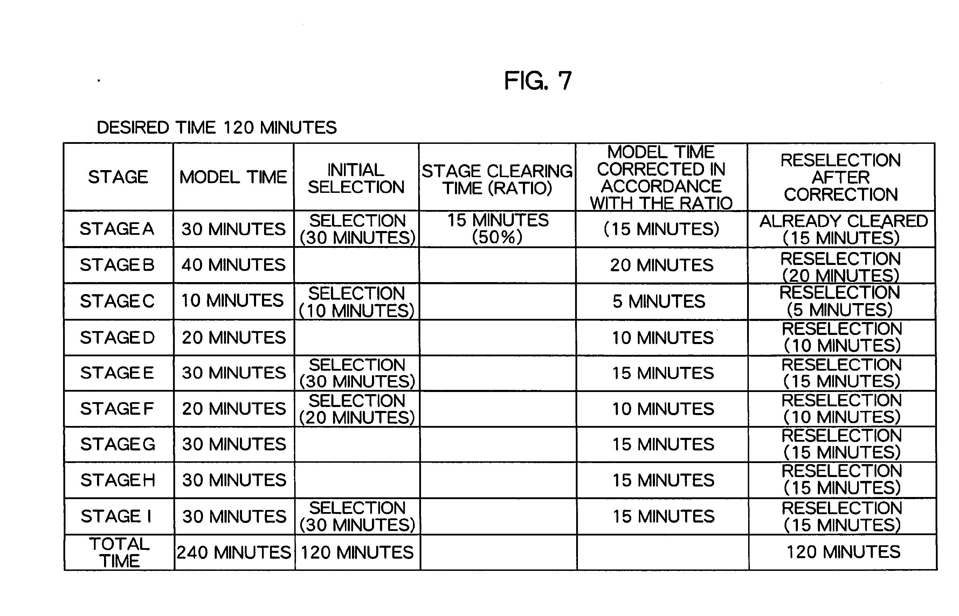

When the player is a skilled person, there is a case in which the stage is cleared in a time shorter than the model time. FIG. 7 shows a case in which the player clears the stage A in 15 minutes as half of its model time. It is expected that this player also clears other stages in a time shorter than the set model time as well as the stage A. Conversely, when the player is a beginner, etc. and clears the stage A in a time longer than its model time, it is expected that this player also clears other stages in a time longer than its model time.

Therefore, the model time of each stage may be corrected according to a clearing speed of this player, and the stage may be also reselected based on the model time after the correction.

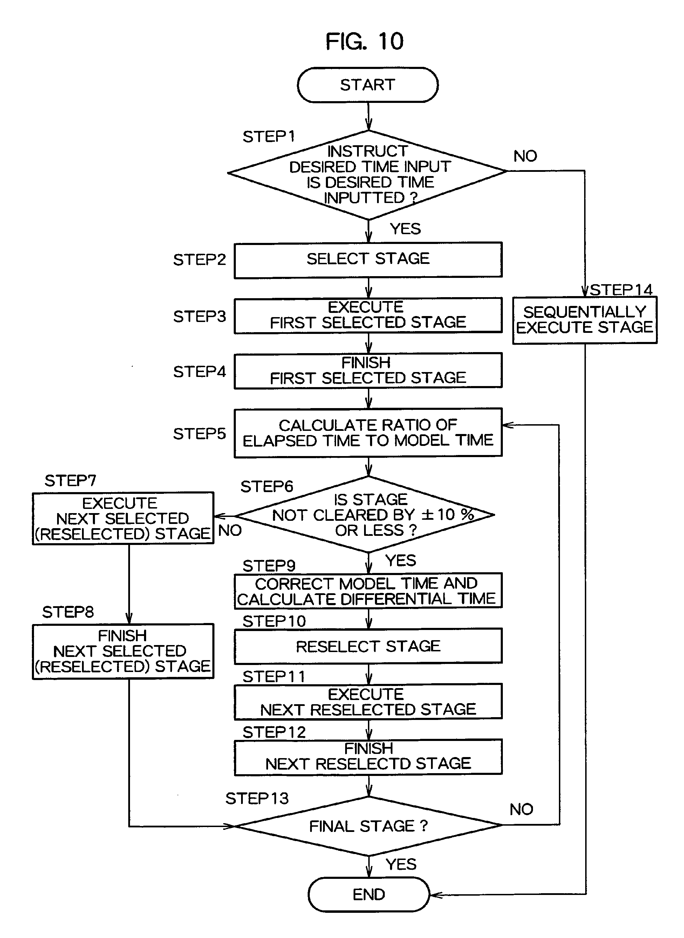

The reselection of the stage after the correction of the model time will next be explained. First, the game machine has the time counter 111, and counts the time required to clear the stage. The game executing means 102 refers to the counted elapsed time. The example of FIG. 7 shows that the time of 15 minutes is required to clear the stage A since the player is a skilled person. Since the model time of the stage A is 30 minutes, it is understood that the ratio of the time required to clear the stage A to the model time is 50 % in the case of this player. The game executing means 102 first calculates this ratio when the player clears the stage A. The game executing means 102 then confirms that the stage A is cleared in a time of 50 % of the model time (STEP5 of FIG. 10).

This game is set by a game maker in advance such that the model time is corrected and the stage is reselected when the ratio of the actually required time to the model time is a predetermined ratio, e.g., when this ratio is ±10 % or more. The reasons for this setting are as follows. Namely, for example, when this ratio is less than ±10 %, there is no large influence on termination in a time approximately equal to the desired time. On the other hand, when this ratio is ±10 % or more, it is expected that a large time difference is caused with respect to the desired time. Therefore, it is considered that there is a possibility that no termination is performed in the time approximately equal to the desired time. In the example of FIG. 7, the above ratio is 50 % and is therefore ±10 % or more. Accordingly, the game executing means 102 determines that the model time is corrected and the reselection of the stage is executed (STEP6 of FIG. 10).

Next, a model time correcting means 130 corrects the model time of each stage according to this ratio 50 % by receiving the determination of the correction of the model time using the game executing means 102. For example, the model time correcting means 130 calculates the model time after the correction by multiplying the model time of each stage by this ratio. In the example of FIG. 7, the model time of the stage B is corrected from 40 minutes to 20 minutes, the model time of the stage C is corrected from 10 minutes to five minutes, and the model time is also similarly corrected with respect to the other stages. The corrected model time is stored in the selected result storage means 107 (STEP9 of FIG. 10). The corrected model time may be stored so as to correspond to the information for discriminating each stage.

On the other hand, the game executing means 102 subtracts the actual time (15 minutes) required to clear the stage from the desired time (120 minutes), and calculates the remaining desired time (105 minutes) (STEP9 of FIG. 10).

Next, the stage selecting means 106 again selects a combination of stages from stages B to I such that the total of the model times is close to this remaining desired time (105 minutes) based on the model time after the correction stored in the selected result storage means 107. At this time, the already cleared stage is set to be outside the object of the stage selection (STEP10 of FIG. 10).

The example of FIG. 7 shows that the stage selecting means 106 selects eight stages constructed by stage B (20 minutes), stage C (5 minutes), stage D (10 minutes), stage E (15 minutes), stage F (10 minutes), stage G (15 minutes), stage H (15 minutes) and stage I (15 minutes). The total of these model times is 105 minutes and is adapted to the remaining desired time (105 minutes).

When the selection of the stage is finished, information for discriminating the selected stage and information showing an order for providing the selected stage to the player are stored in the selected result storage means 107.

The game executing means 102 then executes the game relating to the selected stage according to the order based on the memory contents of the selected result storage means 107, and makes the display means 103 display its game screen (STEP 11 of FIG. 9).

When an important stage is set, the important stage may be preferentially selected in the reselection of the stage.

The correction of the model time explained above and the reselection of the stage after the correction of the model time may be also made every clearing of each stage until the final stage (STEP 13 of FIG. 10). Further, the correction of the model time and the reselection of the stage after the correction of the model time may be also made only when a specific stage is cleared. Moreover, the ratio calculated to correct the model time may be set to a ratio of the "time required to clear the stage" to the model time of this stage, and may be also set to a ratio of the "total of times required to clear stages cleared till then from a certain time point (e.g., game starting time)" to the total of the model times of these stages.

In the above case, the model times of the other stages are uniformly corrected based on the ratio of the clearing time to the model time of the stage A. However, there may be an uncorrected stage according to the characteristics of each stage. For example, it is not appropriate to correct the model time at a stage at which it takes time irrespective of the skill degree of the player as in a case in which the leading character S must move by a certain distance, etc. Accordingly, this stage is set so as not to correct the model time at this stage.

There is a case in which it can be judged that no game is satisfactorily finished in the desired time set by the player even by the reselection of the above stage or the reselection of the stage after the correction of the model time after the game beginning. For example, when the desired time is 120 minutes and 70 minutes are spent to clear the stage A, there is a case in which the total time taken until the game termination becomes 130 minutes (70+30+30) even when only important stages E (30 minutes) and I (30 minutes) are selected later, etc.

In this case, a notifying means 40 corresponding to the CPU 1 in FIG. 1 judges whether it is necessary to reset the desired time or not. When the notifying means 140 judges that the resetting is required (e.g., when the notifying means 140 judges that no game is satisfactorily finished in the desired time set by the player), the notifying means 140 may notify these contents to the player. In the notification, the display means 103 displays characters such as "no game can be finished in the desired time (120 minutes) at this pace !", etc. stored in a notifying content storage means 141 corresponding to the CD-ROM 23 in FIG. 1. For example, the notifying timing may be set to a terminating time point of the stage A, and may be also set to a timing point at which it is judged that it is difficult to finish the game in the desired time during a certain stage.

After this notification, the desired time setting means 104 resets the desired time. The player inputs a new desired time using the controller according to the instructions of the resetting of the desired time. The stage selecting means 106 and the game executing means 102 (stage reselecting means) reselects the stage based on the inputted new desired time.

The game executing means 102 subtracts the actual time (70 minutes) required to clear the stage A from the newly set desired time (130 minutes) and calculates the remaining desired time (60 minutes). Next, the stage selecting means 106 again selects a combination of stages from stages B to I such that the total of the model times is close to this remaining desired time (60 minutes). At this time, the already cleared stage is set to be outside the object of the stage selection.

Here, it is assumed that the stage selecting means 106 selects two stages constructed by stages E (30 minutes) and I (30 minutes). The total of these model times is 60 minutes and is adapted to the remaining desired time (60 minutes). Thus, it is notified that no game is finished in the desired time, and the player again sets the desired time, and the stage is reselected based on the newly set desired time. Accordingly, it is also possible to flexibly cope with a case in which it is judged that no game is finished in the desired time.

The following embodiment is considered in the case of the game machine for business. In the following description, the explanation will be made by replacing the desired time setting means 104 of FIG. 2 with a play time setting means.

An unillustrated fee insertion port is arranged in the game machine for business, and the game is executed by inserting a predetermined number of one-hundred yen coins into this fee insertion port by the player. The play time setting means corresponding to the CPU 1 of FIG. 1 sets a time for playing the game according to the amount of the play fee inserted by the player. The relation of the play fee and the play time is stored in a predetermined storage means as a table and a function. For example, when the player inserts 200 yen, the play time is set to 90 minutes. When the player inserts 300 yen, the play time is set to 120 minutes. When the player inserts 400 yen, the play time is set to 150 minutes. Here, it is assumed that the play time is set to 120 minutes since the player inserts 300 yen.

Next, the game executing means 102 provides the stage A as a first stage to the player, and the time counter 110 counts the elapsed time for clearing this stage A. Here, it is assumed that 20 minutes are required to clear the stage A.

Next, when the player clears the stage A, the game executing means 102 subtracts the elapsed playing time (20 minutes) from the play time (120 minutes), and calculates the remaining play time (100 minutes).

The stage selecting means 106 selects one ormore stages from stages B to I by receiving the above calculating result such that the total of the model times is close to the remaining play time of 100 minutes. For example, stage C (10 minutes), stage E (30 minutes), stage G (30 minutes) and stage I (30 minutes) are selected. The total of these model times becomes 100 minutes and is adapted to the remaining play time. At this time, the already cleared stage is set to be outside the object of the stage selection.

When the selection of the stage is finished, information for discriminating the selected stage and information showing an order for providing the selected stage to the player are stored in the selected result storage means 107.

The game executing means 102 executes the game relating to the selected stage according to the order based on the memory contents of the selected result storage means 107, and makes the display means 103 display its game screen. As explained above, the desired time may be set based on the play fee inserted by the player in the game machine for business.

In the above explanation, the selection of the stage is executed in the clearing timing of the stage A by the player. However, the stage may be also selected by the stage selecting means 106 at the game starting time (e.g., after the play time is set based on the play fee inserted by the player, and before the game of the stage A is executed). In the above explanation, the stage selection is made at the clearing time of the stage A, but may be also made in the clearing case of each stage and may be also made only in the clearing case of a specific stage.

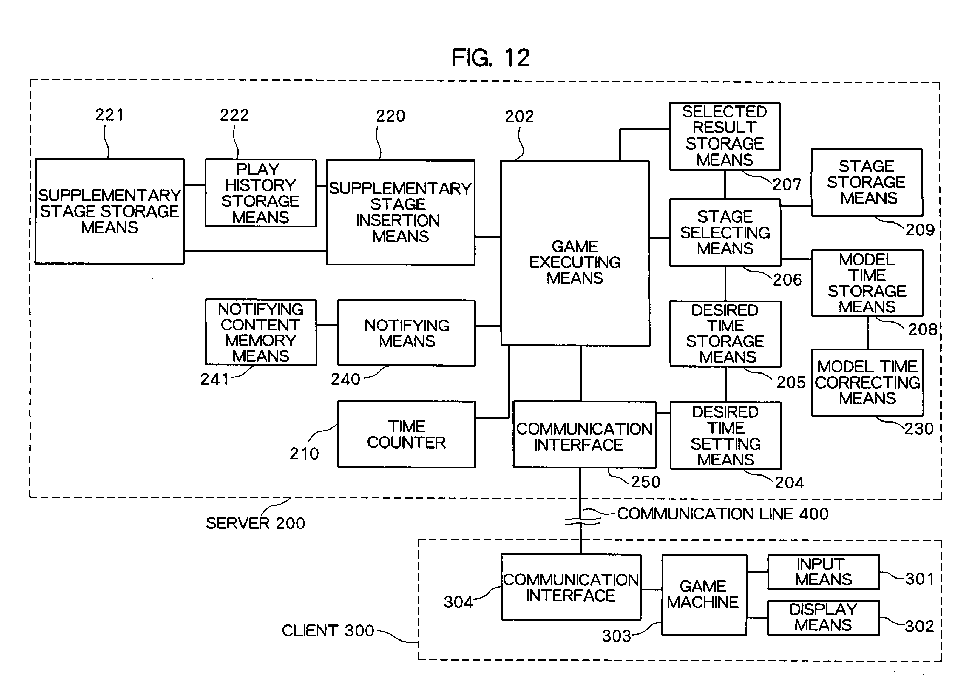

The present invention is not limited to the above embodiment. For example, a so-called net game has recently been distributed. In this net game, a game program is stored in a server and the game is distributed to the player as a client through a communication line such as the Internet, etc. The present invention can be also applied to such a net game. This net game will next be explained in FIG. 12.

A server (game distributing device) 200 and a client 300 are connected to each other through a communication line 400. The server 200 configures the game distributing side, and the client 300 configures the player side. An input means 301, a display means 302, a game machine 303 and a communication interface (modem, etc.) 304 are arranged in the client 300. The input means 301 and the display means 302 respectively correspond to the input means 101 and the display means 103 in FIG. 2. The game machine 303 temporarily stores received data of the game, and receives and processes a signal from the input means 301. The communication interface (modem) 304 receives data transmitted from the server 200, or transmits data based on the input signal processed by the game machine 303, etc. to the server 200. The construction of the server 200 substantially corresponds to a construction from which the input means 101 and the display means 103 are removed in FIG. 2. Thus, the game distributing system is constructed. The function of each means in the game distributing system is substantially similar to that of FIG. 2. A desired time setting means 204 transmits data for displaying a screen for guiding the player so as to input the desired time in the display means 302 to the client 300 through a communication interface 250. The screen for guiding the player so as to input the desired time is displayed in the display means 302 of the client 300 based on these data. When the desired time is inputted on this screen, data showing this desired time are transmitted to the server 200. In the server 200 receiving these data, stage selection processing is mainly performed by a stage selecting means 206. The data (data for executing the game of each stage, etc.) of each stage selected by the stage selecting means 206 are read from a stage storage means 209 in predetermined timing and are distributed to the client 300. With respect to the distribute of the data of each stage, the data of all the stages selected by the stage selecting means 206 may be collectively distributed, and may be also individually distributed every each stage. In the client 300, the game is executed based on the received data.

### INDUSTRIAL APPLICABILITY

According to the present invention, a player having a small amount leisure time can finish the entire game in a short time, or can finish the entire game in a convenient time of the player within a small amount of leisure time while the game is prevented from becoming boring to as great an extent as possible.

## Claims

1. A game machine having stage storage means for storing a plurality of stages and providing a game comprising said plurality of stages to a player, and **characterized in that** the game machine comprises:
model time storage means for storing model times as standard times required to clear each of said stages;
desired time setting means for setting a desired time at which the player wants to play the game; and
stage selecting means for selecting one or more stages such that the total of the model times of said one or more stages stored in said model time storage means is closest to the desired time set by said desired time setting means, wherein
the game comprising said one or more stages selected by said stage selecting means is provided to the player.

2. The game machine according to claim 1, wherein said stage selecting means assigns a flag showing importance to each stage and preferentially selects one or more stages of higher importance.

3. The game machine according to claim 1 or 2, wherein a playing order of said plurality of stages is determined in the game, and the game machine further comprises:
supplementary stage storage means for storing a supplementary stage which corresponds to one or more continuous stages among said plurality of stages causing the inappropriateness in the game connection in a stage omitting case, and has a standard time required for clearing that is shorter than that of this one or more continuous stages; and
supplementary stage insertion means for reading the supplementary stage for dissolving the inappropriateness in this connection from said supplementary stage storage means, and inserting the supplementary stage between pertinent stages when the inappropriateness is caused in the game connection between the respective stages selected by said stage selecting means.

4. The game machine according to claim 3, wherein the game machine further comprises play history storage means for storing a predetermined history among plays of the player, and said supplementary stage insertion means changes the contents of the supplementary stage according to the play history performed by the player till then.

5. The game machine according to any one of claims 1 to 4, wherein said desired time setting means can set the desired time before the game beginning and when playing the game, and can set the desired time a plurality of times when playing the game.

6. The game machine according to any one of claims 1 to 5, wherein, when a difference of a predetermined time or more is caused between an elapsed playing time of the player and the total of the model times of stages cleared until the present stage, one or more stages after said present stage are again selected by said stage selecting means such that the total of the model times of said one or more stages is closest to the remaining desired time obtained by subtracting said elapsed playing time from the desired time set by the player using the desired time setting means.

7. The game machine according to any one of claims 1 to 5, wherein the game machine further comprises:
model time correcting means for calculating the ratio of a elapsed playing time of the player to the total of the model times of stages cleared until the present stage after the game beginning, and changing the model time of each stage to a time according to said ratio when the ratio reaches a predetermined ratio; and
stage reselecting means for again selecting one or more stages after said present stage by said stage selecting means such that the total of the model times changed by said model time correcting means of said one or more stages is closest to the remaining desired time obtained by subtracting said elapsed playing time from the desired time set by said desired time setting means.

8. The game machine according to claim 6 or 7, wherein the game machine further comprises notifying means for notifying the player when a difference of a predetermined time or more is caused between the elapsed playing time of the player and the total of the model times of stages cleared until the present stage.

9. The game machine according to claim 8, wherein display for urging resetting of the desired time is performed after the notification by said notifying means.

10. A game machine having storage means for storing a plurality of stages and providing a game comprising said plurality of stages to a player, and **characterized in that** the game machine comprises:
model time storage means for storing model times as standard times required to clear each of said stages;
play time setting means for setting a time for playing the game according to the amount of a play fee inserted by the player; and
stage selecting means for selecting one or more stages after the present stage such that the total of the model times of said one or more stages is closest to the remaining play time obtained by subtracting an elapsed playing time of the player from the play time set by said play time setting means when a difference of a predetermined time or more is caused between said elapsed playing time and the total of the model times of stages cleared until the present stage after the game beginning, wherein
the game comprising said one or more stages selected by said stage selecting means is provided to the player.

11. A computer program for executing data of a plurality of stages and providing a game comprising said plurality of stages to a player, wherein
the game includes a desired time setting step for setting a desired time at which the player wants to play the game, and
the game includes a stage selecting step for storing model times as standard times required to clear each of said stages, and selecting one or more stages such that the total of the model times of said one or more stages is closest to the desired time set by said desired time setting step, and
the game comprising said one or more stages selected by said stage selecting step is provided to the player.

12. The computer program according to claim 11, wherein a flag showing importance is assigned to data of each stage and one or more stages of higher importance are preferentially selected in said stage selecting step.

13. The computer program according to claim 11 or 12, wherein a playing order of said plurality of stages is determined in the game, and
the game holds a supplementary stage which corresponds to one or more continuous stages among said plurality of stages causing the inappropriateness in the game connection in a stage omitting case, and includes a standard time required for clearing that is shorter than that of this one or more continuous stages, and
the game includes a supplementary stage insertion step for reading-out the data of said supplementary stage for dissolving the inappropriateness of this connection, and inserting the data between pertinent stages when the inappropriateness is caused in the game connection between the respective stages selected in said stage selecting step.

14. The computer program according to any one of claims 11 to 13, wherein the desired time can be set before the game beginning and when playing the game and can be set a plurality of times when playing the game by said desired time setting step.

15. The computer program according to any one of claims 11 to 14, wherein, when the game includes a step for calculating the difference between an elapsed playing time of the player and the total of the model times of stages cleared until the present stage, and again selecting one or more stages after said present stage such that the total of the model times of said one or more stages is closest to the remaining desired time obtained by subtracting said elapsed playing time from the desired time set by the player in the desired time setting step when the difference is a predetermined time or more.

16. The computer program according to any one of claims 11 to 14, wherein the game further includes:
a model time correcting step for calculating the ratio of an elapsed playing time of the player to the total of the model times of stages cleared until the present stage after the game beginning, and changing the standard time of each stage to a time according to said ratio when the ratio reaches a predetermined ratio; and
a stage reselecting step for again selecting one or more stages after said present stage using said stage selecting step such that the total of the model times changed by said model time correcting step of said one or more stages is closest to the remaining desired time obtained by subtracting said elapsed playing time from the desired time set in said desired time setting step.

17. The computer program according to claim 15 or 16, wherein the game further includes a notifying step for notifying the player when a difference of a predetermined time or more is caused between the elapsed playing time of the player and the total of the model times of stages cleared until the present stage.

18. The computer program according to claim 17, wherein display for urging resetting of the desired time is performed after the notification by said notifying step.

19. A game method of a game machine for storing a plurality of stages and providing a game comprising said plurality of stages to a player, and **characterized in that**
standard times required to clear each of said stages are stored in advance;
the player sets a desired time it is wished to play the game for;
one or more stages are then selected such that the total of model times of said one or more stages is closest to said desired time; and
the game comprising said one or more selected stages is provided to the player.

20. The game method according to claim 19, wherein a flag showing an importance is assigned to each of said plurality of stages and is stored and one or more stages of higher importance are preferentially selected in the selection of the stage.

21. The game method according to claim 19 or 20, wherein the game having a determined playing order of said plurality of stages is provided to the player, and
a supplementary stage is stored such that the supplementary stage corresponds to one or more continuous stages among said plurality of stages causing the inappropriateness in the game connection in a stage omitting case, and has a standard time required for clearing that is shorter than that of this one or more continuous stages,
the supplementary stage for dissolving the inappropriateness in this connection is read out when the inappropriateness is caused in the game connection between the respective stages selected in the selection of said stage, and
the read-out supplementary stage is inserted between pertinent stages.

22. The game method according to any one of claims 19 to 21, wherein the desired time can be set before the game beginning and when playing the game and can be set a plurality of times.

23. The game method according to any one of claims 19 to 22, wherein the difference between an elapsed playing time of the player and the total of the model times of stages cleared until the present stage is calculated, and one or more stages after said present stage are again selected such that the total of the model times of said one or more stages is closest to the remaining desired time obtained by subtracting said elapsed playing time from said desired time when the difference is a predetermined time or more.

24. The game method according to any one of claims 19 to 22, wherein the ratio of an elapsed playing time of the player to the total of the model times of stages cleared until the present stage is calculated after the game beginning, and the standard time of each stage is corrected to a time according to said ratio when the ratio reaches a predetermined ratio; and
one or more stages after said present stage are again selected such that the total of said corrected model times of said one or more stages is closest to the remaining desired time obtained by subtracting said elapsed playing time from said desired time.

25. The game method according to claim 23 or 24, wherein the difference between the elapsed playing time of the player and the total of the model times of stages cleared until the present stage is calculated, and notification is given to the player when the difference is a predetermined time or more.

26. The game method according to claim 25, wherein display for urging resetting of the desired time is performed after said notification.

27. A game distributing system for storing a game comprising a plurality of stages in a server and providing said game to a client connected via a communication line, and **characterized in that** said server comprises:
model time storage means for storing model times as standard times required to clear each of said stages;
desired time setting means for setting a desired time at which a player wants to play the game; and
stage selecting means for selecting one or more stages such that the total of the model times of said one or more stages stored in said model time storage means is closest to the desired time set by said desired time setting means, wherein
said client receives the game comprising said one or more stages selected by said stage selecting means so that the game is provided to the player.

28. The game distributing system according to claim 27, wherein said stage selecting means assigns a flag showing an importance to each stage and preferentially selects one or more stages of higher importance.

29. The game distributing system according to claim 27 or 28, wherein a playing order of said plurality of stages is determined in the game, and said server further comprises:
supplementary stage storage means for storing a supplementary stage which corresponds to one or more continuous stages among said plurality of stages causing the inappropriateness in the game connection in a stage omitting case, and has a standard time required for clearing that is shorter than that of this one or more continuous stages; and
supplementary stage insertion means for reading the supplementary stage for dissolving the inappropriateness in this connection from said supplementary stage storage means, and inserting the supplementary stage between pertinent stages when the inappropriateness is caused in the game connection between the respective stages selected by said stage selecting means.

30. The game distributing system according to any one of claims 27 to 29, wherein said desired time setting means can set the desired time before the game beginning and when playing the game, and can set the desired time a plurality of times when playing the game.

31. The game distributing system according to any one of claims 27 to 30, wherein, when a difference of a predetermined time or more is caused between an elapsed playing time of the player and the total of the model times of stages cleared until the present stage, one or more stages after said present stage are again selected by said stage selecting means such that the total of the model times of said one or more stages is closest to the remaining desired time obtained by subtracting said elapsed playing time from the desired time set by said desired time setting means.

32. The game distributing system according to any one of claims 27 to 30, wherein the game distributing system further comprises:
model time correcting means for calculating the ratio of an elapsed playing time of the player to the total of the model times of stages cleared until the present stage after the game beginning, and changing the standard time of each stage to a time according to said ratio when the ratio reaches a predetermined ratio; and
stage reselecting means for again selecting one or more stages after said present stage by said stage selecting means such that the total of the model times changed by said model time correcting means of said one or more stages is closest to the remaining desired time obtained by subtracting said elapsed playing time from the desired time set by said desired time setting means.

33. The game distributing system according to claim 31 or 32, wherein the game distributing system further comprises notifying means for notifying the player when a difference of a predetermined time or more is caused between the elapsed playing time of the player and the total of the model times of stages cleared until the present stage.

34. The game distributing system according to claim 33, wherein display for urging resetting of the desired time is performed after the notification by said notifying means.

35. An information recording medium readable by the computer and recording the computer program according to any one of claims 11 to 18.

36. A game machine for providing a game comprising a plurality of stages to a player, comprising:
stage storage means for storing data of said plurality of stages;
standard time storage means for storing a standard time correspondingly to each of said plurality of stages;
desired time setting means for setting a desired time for which said player wishes to play the game;
stage selecting means for selecting at least one of said plurality of stages based on the desired time set by said player and the standard time stored in said standard time storage means correspondingly to each stage; and
game executing means for providing the game comprising at least one of said plurality of stages selected by said stage selecting means based on the data stored in said stage storage means.

37. The game machine according to claim 36, wherein
said stage storage means stores importance information showing an importance of each of said plurality of stages, and
said stage selecting means selects at least one of said plurality of stages further based on said importance information.

38. The game machine according to claim 36 or 37, wherein the game machine further comprises:
supplementary object stage storage means for storing information for specifying a supplementary obj ect stage among saidplurality of stages; and
supplementary stage storage means for storing data of the supplementary stage correspondingly to said supplementary object stage, wherein
said game executing means provides the game comprising the supplementary stage corresponding to the unselected supplementary object stage and at least one of said plurality of stages selected by said stage selecting means when said supplementary obj ect stage is not selected by said stage selecting means.

39. The game machine according to claim 38, wherein the game machine further comprises play history storage means for storing a play history of said player,
the data of said supplementary stage include parameter information relating to the contents of the supplementary stage, and
said game executing means comprises means for providing the game of the supplementary stage corresponding to said supplementary object stage based on the parameter information included in the data of the supplementary stage, and means for controlling the parameter information based on the play history stored in said play history storage means.

40. The game machine according to claim 38, wherein the game machine further comprises play history storage means for storing a play history of said player, wherein
said supplementary stage storage means stores the data of a plurality of kinds of supplementary stages correspondingly to said supplementary object stage, and
said game executing means selects one of the a plurality of kinds of supplementary stages corresponding to the unselected supplementary object stage based on the play history stored in said play history storage means, and provides the game comprising the selected supplementary stage and at least one of said plurality of stages selected by said stage selecting means when said supplementary object stage is not selected by said stage selecting means.

41. The game machine according to any one of claims 36 to 40, wherein the game machine further comprises:
judging means for judging whether it is necessary to reselect the stage or not based on a time required to clear a predetermined stage and the standard time of the predetermined stage when the predetermined stage is cleared by said player; and
stage reselecting means for selecting at least one of uncleared stages among said plurality of stages based on the remaining desired time obtained by subtracting an elapsed playing time till then from said desired time and the standard time stored in said standard time storage means correspondingly to each stage when it is judged by said judging means that reselection is required.

42. The game machine according to claim 41, wherein said stage reselecting means comprises:
means for calculating the ratio of the time required to clear the predetermined stage to the standard time of said predetermined stage; and
means for calculating a correcting standard time according to said ratio based on said ratio and the standard time stored in said standard time storage means, wherein
said stage reselecting means selects at least one of uncleared stages among said plurality of stages based on the remaining desired time obtained by subtracting the elapsed playing time till then from said desired time, and the correcting standard time calculated with respect to each stage.

43. The game machine according to any one of claims 36 to 40, wherein the game machine further comprises:
judging means for judging whether it is necessary to reselect the stage or not based on an elapsed playing time till then and the total of the standard times of stages cleared till then when a predetermined stage is cleared by said player; and
stage reselecting means for selecting at least one of uncleared stages among said plurality of stages based on the remaining desired time obtained by subtracting said elapsed playing time from said desired time and the standard time stored in said standard time storage means correspondingly to each stage when it is judged by said judging means that reselection is required.

44. The game machine according to claim 43, wherein said stage reselecting means comprises:
means for calculating the ratio of the elapsed playing time till then to the total of the standard times of stages cleared till then; and
means for calculating a correcting standard time according to said ratio based on said ratio and the standard time stored in said standard time storage means, wherein
said stage reselecting means selects at least one of uncleared stages among said plurality of stages based on the remaining desired time obtained by subtracting said elapsed playing time from said desired time, and the correcting standard time calculated with respect to each stage.

45. The game machine according to any one of claims 41 to 44, wherein the game machine comprises notifying means for notifying the contents of the reselection to said player when it is judged by said judging means that reselection is required.

46. The game machine according to claim 45, wherein
said notifying means makes said player reset said desired time, and
said stage reselecting means calculates said remaining desired time by subtracting the elapsed playing time till then from said desired time after the resetting.

47. The game machine according to any one of claims 36 to 46, wherein said desired time setting means comprises means for making said player insert a play fee, and sets said desired time according to the amount of said play fee.

48. A control method of a game machine for providing a game comprising a plurality of stages to a player, and **characterized in that** the game method comprises:
a desired time setting step for setting a desired time for which said player wishes to play the game;
a stage selecting step for selecting at least one of said plurality of stages based on the desired time set by said player, and a standard time stored in standard time storage means storing the standard time thereto correspondingly to each of said plurality of stages; and
a game executing step for providing the game comprising at least one of said plurality of stages selected in said stage selecting step to said player based on data stored in stage storage means storing the data of said plurality of stages thereto.

49. A program for making a computer function as a game machine for providing a game comprising a plurality of stages to a player, wherein said computer functions as:
stage storage means for storing data of said plurality of stages;
standard time storage means for storing a standard time correspondingly to each of said plurality of stages;
desired time setting means for setting a desired time for which said player wishes to play the game;
stage selecting means for selecting at least one of said plurality of stages based on the desired time set by said player and the standard time stored in said standard time storage means correspondingly to each stage; and
game executing means for providing the game comprising at least one of said plurality of stages selected by said stage selecting means based on the data stored in said stage storage means.

50. An information recording medium readable by a computer and recording a program for making the computer function as a game machine for providing a game comprising a plurality of stages to a player, wherein said computer functions as:
stage storage means for storing data of said plurality of stages;
standard time storage means for storing a standard time correspondingly to each of said plurality of stages;
desired time setting means for setting a desired time for which said player wishes to play the game;
stage selecting means for selecting at least one of said plurality of stages based on the desired time set by said player and the standard time stored in said standard time storage means correspondingly to each stage; and
game executing means for providing the game comprising at least one of said plurality of stages selected by said stage selecting means based on the data stored in said stage storage means.

51. A game distributing device communicating with a client terminal and providing a game comprising a plurality of stages to a player relating to said client terminal, and **characterized in that** the game distributing device comprises:
stage storage means for storing data of said plurality of stages;
standard time storage means for storing a standard time correspondingly to each of said plurality of stages;
desired time setting means for setting a desired time for which said player wishes to play the game;
stage selecting means for selecting at least one of said plurality of stages based on the desired time set by said player and the standard time stored in said standard time storage means correspondingly to each stage; and
game executing means for making said client terminal execute the game comprising at least one of said plurality of stages selected by said stage selecting means based on the data stored in said stage storage means.
